(19) Europäisches Patentamt
European Patent Office
Office européen des brevets

(11) **EP 3 882 300 B1**

(12) **EUROPEAN PATENT SPECIFICATION**

(45) Date of publication and mention
of the grant of the patent:
**03.12.2025 Bulletin 2025/49**

(21) Application number: **21162504.1**

(22) Date of filing: **15.03.2021**

(51) International Patent Classification (IPC):
***C08J 3/12*** (2006.01)   ***B29C 64/00*** (2017.01)
***B33Y 10/00*** (2015.01)

(52) Cooperative Patent Classification (CPC):
**C08J 3/12; B29B 9/12; B29B 9/16; B29C 64/153;
B33Y 10/00; B33Y 70/00;** B29B 2009/125;
C08J 2367/02; C08J 2371/10; C08J 2381/04

(54) **RESIN POWDER AND RESIN POWDER FOR PRODUCING THREE-DIMENSIONAL OBJECT, AND THREE-DIMENSIONAL OBJECT PRODUCING METHOD AND THREE-DIMENSIONAL OBJECT PRODUCING APPARATUS**

HARZPULVER UND HARZPULVER ZUR HERSTELLUNG EINES DREIDIMENSIONALEN OBJEKTS UND VERFAHREN ZUR HERSTELLUNG EINES DREIDIMENSIONALEN OBJEKTS UND VORRICHTUNG ZUR HERSTELLUNG EINES DREIDIMENSIONALEN OBJEKTS

POUDRE DE RÉSINE ET POUDRE DE RÉSINE POUR LA FABRICATION D'OBJET TRIDIMENSIONNEL ET PROCÉDÉ DE FABRICATION D'OBJET TRIDIMENSIONNEL ET APPAREIL DE PRODUCTION D'OBJET TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2020 JP 2020048586**

(43) Date of publication of application:
**22.09.2021 Bulletin 2021/38**

(73) Proprietor: **Ricoh Company, Ltd.
Tokyo 143-8555 (JP)**

(72) Inventor: **IWATSUKI, Hitoshi
Tokyo 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**US-A1- 2009 186 290     US-A1- 2013 302 730
US-A1- 2018 147 780**

**Description**

BACKGROUND OF THE INVENTION

Field of the Invention

The present disclosure relates to a resin powder and a resin powder for producing a three-dimensional object, and a three-dimensional object producing method and a three-dimensional object producing apparatus.

Description of the Related Art

A proposed resin powder for use in production of a three-dimensional object has an approximately circular cylindrical shape obtained by, for example, extruding a melt resin liquid, drawing the resultant to form resin fibers, transferring the resin fibers to a cutting blade while clamping the resin fibers with a movable clamp, and cutting the resin fibers (for example, see International Publication No. WO2017/112723).
US 2013/0302730 A1 discloses a toner comprising toner particles each of which contains a binder resin containing a resin formed by the reaction of i) a resin (A) having a softening point TA (°C) of 70°C to 105°C and having a peak top of endothermic peaks at 55°C to 120°C with ii) a resin (B) having a softening point TB (°C) of 120°C to 160°C and having a peak top of endothermic peaks at 55°C to 120°C, and, in its viscoelasticity characteristics, has a storage elastic modulus at temperature 180°C(G'180) of $3.0 \times 10^3$ Pa to $3.0 \times 10^4$ Pa, where the loss tangent tan delta has at least one peak having a peak top within the range of 50°C to 70°C and, when peak top temperature of the peak is represented by T(°C), the loss tangent at T+10(°C) [tan delta(T+10)] is 1.0 to 1.5 and the ratio of tan delta(T+10)/tan delta(110) is 0.8 to 1.5.
US 2009/0186290 A1 discloses a non-magnetic toner including toner particles each containing at least a binder resin, a colorant, and a wax component, and an inorganic fine powder, in which: (1) when a temperature in a temperature range of 50 to 80 °C at which a loss tangent (tan delta) shows a maximum is represented by T1, a storage elastic modulus of the toner at the temperature T1 (G'(T1)) satisfies a relationship of $5.00 \times 10^7 < =G'(T1) < =1.00 \times 10^9$ (dN/m2); (2) a continuous temperature range with a width of 15°C or more in which the loss tangent (tan delta) is 0.80 to 2.00 is present in the temperature range of 50 to 80°C; and (3) the loss tangent (tan delta) is 1.00 or more in a temperature range of 120 to 160°C.
US 2018/0147780 A1 discloses a method of manufacturing a solid freeform fabrication object including forming a layer of resin powder for solid freeform fabrication including particles having a pillar-like form and solidifying a particular area of the layer with irradiation of laser beams, wherein the laser beams have an energy intensity distribution having a top hat-like form.

SUMMARY OF THE INVENTION

The invention is set out in the appended independent claims. The dependent claims describe advantageous embodiments.

BRIEF DESCRIPTION OF THE DRAWINGS

FIG. 1A is a schematic perspective view illustrating an example of a columnar particle;
FIG. 1B is a schematic side view of the columnar particle illustrated in FIG. 1A;
FIG. 1C is a schematic side view illustrating an example of a shape of a columnar particle having ends with no vertices;
FIG. 1D is a schematic side view illustrating another example of a shape of a columnar particle having ends with no vertices;
FIG. 1E is a schematic side view illustrating another example of a shape of a columnar particle having ends with no vertices;
FIG. 1F is a schematic side view illustrating another example of a shape of a columnar particle having ends with no vertices;
FIG. 1G is a schematic side view illustrating another example of a shape of a columnar particle having ends with no vertices;
FIG. 1H is a schematic side view illustrating another example of a shape of a columnar particle having ends with no vertices;
FIG. 1I is a schematic side view illustrating another example of a shape of a columnar particle having ends with no vertices;

FIG. 2 is an image illustrating an example of a resin powder of the present disclosure;

FIG. 3 is an enlarged image of a columnar body encircled with a dotted line circle in FIG. 2;

FIG. 4 is a schematic view illustrating an example of a particle formed by cutting a columnar body diagonally;

FIG. 5 is a schematic view illustrating an example of a three-dimensional object producing apparatus of the present disclosure;

FIG. 6A is a schematic view illustrating an example for describing a three-dimensional object producing method of the present disclosure using a three-dimensional object producing apparatus of the present disclosure;

FIG. 6B is a schematic view illustrating another example for describing a three-dimensional object producing method of the present disclosure using a three-dimensional object producing apparatus of the present disclosure;

FIG. 7A is a schematic view illustrating another example for describing a three-dimensional object producing method of the present disclosure using a three-dimensional object producing apparatus of the present disclosure;

FIG. 7B is a schematic view illustrating another example for describing a three-dimensional object producing method of the present disclosure using a three-dimensional object producing apparatus of the present disclosure;

FIG. 8A is an image illustrating an example of an upper surface of a three-dimensional object produced in Example;

FIG. 8B is an image illustrating another example of an upper surface of a three-dimensional object produced in Example;

FIG. 8C is an image illustrating another example of an upper surface of a three-dimensional object produced in Example;

FIG. 8D is an image illustrating another example of an upper surface of a three-dimensional object produced in Example;

FIG. 9 is a schematic view illustrating surface roughness of a three-dimensional object;

FIG. 10A is a graph plotting measurements of "Storage modulus", "Loss modulus", "Complex Viscosity", and "$\tan\delta$ (loss tangent)" with respect to temperature change in Example 4; and

FIG. 10B is a graph plotting measurements of "Storage modulus", "Loss modulus", "Complex Viscosity", and "$\tan\delta$ (loss tangent)" with respect to temperature change in Comparative Example 2.

DESCRIPTION OF THE EMBODIMENTS

(Resin powder)

A resin powder of the present disclosure has the following characteristic. When the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent ($\tan\delta$) of 18.0 or greater.

With existing resin powders, there is a problem that three-dimensional objects having little warpage, little surface roughness, and an excellent strength may not be obtained.

The resin powder of the present disclosure having specific resin properties has been found to be able to produce a three-dimensional object excellent in all of warpage suppression and surface roughness.

The present disclosure has an object to provide a resin powder that can produce a three-dimensional object having little warpage and little surface roughness.

The present disclosure can provide resin powder that can produce a three-dimensional object having little warpage and little surface roughness.

The loss tangent ($\tan\delta$) is a value obtained by dividing "Loss modulus" by "Storage modulus". When the loss tangent ($\tan\delta$) is a large value, it is meant that the amount of a loss component (liquid component) of a resin is greater than the amount of a storage component (solid component) of the resin. When the conditions for measuring the loss tangent ($\tan\delta$) are as described above, what is measured is a liquid component/solid component ratio (loss tangent ($\tan\delta$)) in the process in which the resin powder is melted with a heat source and cooled. That is, a loss tangent ($\tan\delta$) of 18.0 or greater is considered to suggest that the liquid component is dominant and a melted resin powder does not shrink but stores the shape.

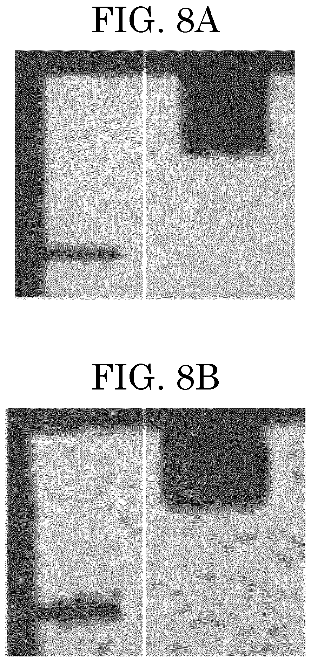

When a three-dimensional object as illustrated in FIG. 8A is produced, warpage (shrinkage) of the object can be clearly observed when an end portion of the object is closely looked. That is, "warpage" of a three-dimensional object refers to, for example, deformation from a desired shape due to internal stress.

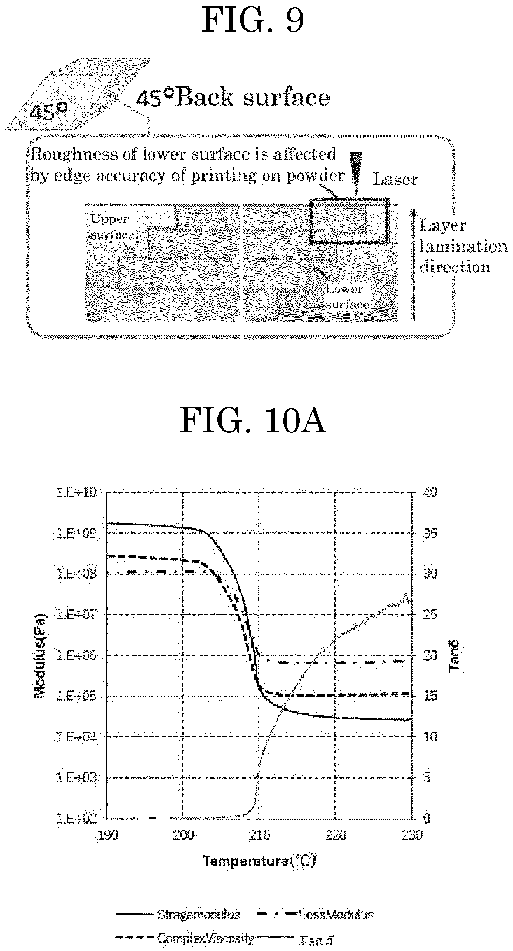

When a three-dimensional object is produced by lamination of layers, surface roughness of the three-dimensional object occurs depending on the formation accuracy of the end portions of each layer. Because a three-dimensional object is a laminated body produced by laminating single layers as illustrated in, for example, FIG. 9, it is considered that the three-dimensional object obtains a smooth surface by each layer not shrinking but retaining the shape.

The loss tangent (tanδ) is 18.0 or greater, preferably 20.0 or greater, more preferably 20.9 or greater, and particularly preferably 20.0 or greater but 45.0 or less. When the loss tangent (tanδ) is 18.0 or greater, contribution of a liquid component of the resin powder increases during production of a three-dimensional object, and a three-dimensional object having little warpage and little surface roughness can be obtained.

The loss tangent (tanδ) is measured when the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121).

The unit configured to measure the loss tangent (tanδ) is not particularly limited and may be appropriately selected depending on the intended purpose so long as the measuring conditions described above can be satisfied. Examples of the unit include a dynamic viscoelasticity measuring instrument (instrument name: ARES-G2, available from TA Instruments Japan Inc.).

The melting point (Tm) is preferably, for example, 210 degrees C or higher but 350 degrees C or lower, more preferably 210 degrees C or higher but 250 degrees C or lower, and yet more preferably 210 degrees C or higher but 235 degrees C or lower. When the melting point (Tm) is 210 degrees C or higher but 350 degrees C or lower, the resin powder has a sufficient heat resistance and can be used for various applications. When the melting point (Tm) is lower than 210 degrees C, it is considered that the resin powder tends to shrink when the resin powder cools and solidifies after melted. This is considered as follows. A melted resin shrinks in the temperature lowering process. When the melting point of the resin is low, the temperature for melting the resin is also low. Therefore, temperature difference between these temperatures and normal temperature is small, and the amount of volume shrinkage of the resin is small. On the other hand, a resin having a melting point higher than 200 degrees C, for example, a resin having a melting point of 222 degrees C has a temperature difference of approximately 200 degrees C from normal temperature, and the amount of volume shrinkage of such a resin increases correspondingly. Therefore, a three-dimensional object to be produced will have apparent problems in warpage, surface roughness, and strength.

The melting point (Tm) is measured by raising the temperature at a rate of 10 degrees C/min in differential scanning calorimetry (DSC) according to ISO 3146 (Testing Methods for Transition Temperatures of Plastics, JIS K7121). In the following description, measurement from 50 degrees C to 250 degrees C is referred to as first run, measurement from 250 degrees C to 50 degrees C is referred to as temperature lowering measurement run, and a high pressure differential scanning calorimeter (instrument name: DISCOVERY DSC 25P, available from TA Instruments Japan Inc.) is used as an instrument.

(Measurement conditions)

- Start temperature: 50 degrees C
- Temperature raising rate: 10 degrees C/min
- End temperature: 250 degrees C
- Temperature lowering rate: 10 degrees C/min
- End temperature: 50 degrees C

An endothermic peak temperature on a DSC curve of the first run obtained by the measurement is referred to as melting point (Tm). Analyzing software (TA Universal analysis) can be used for extracting the endothermic peak temperature.

The crystallization temperature (Tc) of the resin powder is, for example, preferably 180 degrees C or higher but 250 degrees C or lower and more preferably 180 degrees C or higher but 190 degrees C or lower.

The method for measuring the crystallization temperature (Tc) is the same as the method for measuring the melting point (Tm), and an exothermic peak temperature on a DSC curve of temperature lowering measurement run obtained by the measurement is referred to as crystallization temperature (Tc). Analyzing software (TA Universal analysis) can be used for extracting the exothermic peak temperature.

The viscosity of the resin powder is, for example, preferably $1.0 \times 10^5$ Pa·s or lower. When the viscosity of the resin powder is $1.0 \times 10^5$ Pa·s or lower, control on the dimensions and shape of the resin when the resin melts or cools can be stabilized. That is, when the viscosity of the resin powder is $1.0 \times 10^5$ Pa·s or lower, control on the dimensions and shape can be stabilized in order to control volume expansion or shrinkage when the resin is melted or cooled. The method for measuring the viscosity is not particularly limited and may be appropriately selected depending on the intended purpose. For example, the viscosity can be measured with a dynamic viscoelasticity measuring instrument (instrument name: ARES-G2, available from TA Instruments Japan Inc.). More specifically, a resin powder is weighed out in 0.1 g, and pressurized at a pressure of 8 N for 1 minute, to form a pellet. The viscosity (Pa·s) of the formed pellet can be measured with a dynamic viscoelasticity measuring instrument (instrument name: ARES-G2, available from TA Instruments Japan Inc.) at a distance of 0.5 mm (constant) at a temperature lowering rate of 1 degree/min.

A thermoplastic resin can be used as the resin of the resin powder. The thermoplastic resin refers to a resin that plasticizes and melts when heat is applied. A crystalline resin may be used among thermoplastic resins. The crystalline resin refers to a resin that has a melting peak when measured according to ISO 3146 (Testing Methods for Transition Temperatures of Plastics, JIS K7121).

A crystal-controlled crystalline thermoplastic resin is preferable as the crystalline resin. A crystalline thermoplastic resin that is crystal size- or crystal orientation-controlled by external stimulation methods such as heat treatment, drawing, a crystal nucleating agent, and ultrasonic treatment is more preferable.

The method for producing the crystalline thermoplastic resin is not particularly limited and may be appropriately selected depending on the intended purpose. Examples of the method include an annealing treatment of heating a resin at a temperature higher than or equal to a glass transition temperature of the resin to increase crystallinity, and a method of adding a crystal nucleating agent for better increasing crystallinity and then annealing the resin. Other examples of the method include a method of applying ultrasonic waves to a resin to increase crystallinity, a method of dissolving a resin in a solvent and slowly volatilizing the solvent to increase crystallinity, and a method of increasing orientation and crystallinity of a resin through, for example, crystallinity growth by external electric field application treatment or through drawing, and grinding or cutting the resultant.

Annealing can be performed by leaving a resin to stand at a temperature lower than the melting point by about 20 degrees C for a long time (about from 12 hours through 24 hours), and subsequently slowly cooling the resin to room temperature.

Drawing is performed by drawing a liquid in which a resin for producing a three-dimensional object is dissolved into a fibrous shape using an extruder, while stirring the liquid at a temperature higher than the melting point by 30 degrees C or more. Here, the melt liquid is drawn to fibers having a size that is about one time or more but ten times or less longer. The maximum draw ratio can be changed per resin or per melt viscosity.

Ultrasonic wave application can be performed by adding a glycerin (available from Tokyo Chemical Industry Co., Ltd., reagent grade) solvent to the resin in an amount about five times greater than the amount of the resin, heating the resultant to a temperature higher than the melting point by 20 degrees C, and applying ultrasonic waves to the resultant for 2 hours using an ultrasonic generator (available from Hielscher Ultrasonics GmbH, ULTRASONICATOR UP200S) at 24 kHz at an amplitude of 60%. Subsequently, it is preferable to clean the resultant with an isopropanol solvent at room temperature and dry the resultant in a vacuum.

External electric field application treatment can be performed by heating the resin at higher than or equal to the glass transition temperature, applying a 600 V/cm alternating-current electric field (500 Hz) to the resultant for 1 hour, and slowly cooling the resultant.

In a PBF method, a greater temperature width (temperature window) for crystal phase change is preferable because warpage can be suppressed during production of a three-dimensional object. In terms of crystal phase change, a resin powder having a greater difference between the melting start temperature and the recrystallization temperature during cooling is more preferable because a better object productivity is obtained with such a resin powder.

Examples of the resin of the resin powder include polymers such as polyolefin, polyamide, polyester, polyether, polyphenylene sulfide (PPS), polyaryl ketone, liquid crystal polymers (LCP), polycetal (POM, with a melting point of 175 degrees C), polyimide, and fluororesins. One of these resins may be used alone or two or more of these resins may be used in combination. Thermoplastic resins may contain additives such as a flame retardant, a plasticizer, a heat stabilizing agent, and a crystal nucleating agent, and polymer particles of, for example, a non-crystalline resin in addition to the polymer mentioned above. One of these additives may be used alone or two or more of these additives may be used in combination.

Examples of polyolefin include polyethylene (PE), and polypropylene (PP, with a melting point of 180 degrees C). One of these polyolefins may be used alone or two or more of these polyolefins may be used in combination.

Examples of polyamide include polyamide 410 (PA410), polyamide (PA6), polyamide 66 (PA66, with a melting point of 265 degrees C), polyamide 610 (PA610), polyamide 612 (PA612), and polyamide 11 (PA11), polyamide 12 (PA12); and semiaromatic polyamide 4T (PA4T), polyamide MXD6 (PAMXD6), polyamide 6T (PA6T), polyamide 9T (PA9T, with a melting point of 300 degrees C), and polyamide 10T (PA10T). One of these polyamides may be used alone or two or more of these polyamides may be used in combination. Among these polyamides, PA9T is referred to as polynonamethylene terephthalamide, contains: diamine containing 9 carbon atoms; and a terephthalic acid monomer, and is referred to as semi-aromatic series because PA9T is typically aromatic at the carboxylic acid side. Examples of polyamides of the present disclosure also include aramid produced from p-phenylenediamine and a terephthalic acid monomer, as examples of wholly aromatic series that are also aromatic at the diamine side, not only at the carboxylic acid side.

Examples of polyester include polyethylene terephthalate (PET, with a melting point of 260 degrees C), polybutylene terephthalate (PBT, with a melting point of 218 degrees C), and polylactic acid (PLA). Polyesters containing aromatic series that partially contain terephthalic acid or isophthalic acid are also suitable in the present disclosure in terms of imparting heat resistance.

A commercially available product can be used as polybutylene terephthalate. Examples of the commercially available product include NOVADURAN 5505S (available from Mitsubishi Engineering-Plastics Corporation), 5605 (available from Mitsubishi Engineering-Plastics Corporation), and NOVADURAN 5020 (available from Mitsubishi Engineering-Plastics Corporation).

Examples of polyether include polyether ether ketone (PEEK, with a melting point of 343 degrees C), polyether ketone (PEK), polyether ketone ketone (PEKK), polyaryl ether ketone (PAEK), polyether ether ketone ketone (PEEKK), and polyether ketone ether ketone ketone (PEKEKK). Crystalline polymers other than polyether may also be used. Examples of crystalline polymers include polyacetal, polyimide, and polyether sulfone. A resin that has two melting point peaks (may also be referred to as melting peaks) such as PA9T may be used (the resin temperature needs to be raised to higher than or equal to the second melting point peak in order to completely melt such a resin).

A commercially available product can be used as polyether ether ketone. Examples of the commercially available product include HT P22PF (available from VICTREX PLC).

According to the invention the resin powder contains at least one selected from the group consisting of polybutylene terephthalate, polyphenylene sulfide, and polyether ether ketone.

-Additives-

The resin powder may contain additives in addition to the resin.

Additives are not particularly limited and may be appropriately selected depending on the intended purpose. Examples of additives include an antioxidant, a flame retardant, an inorganic reinforcer, a fluidizer, a plasticizer, and a crystal nucleating agent.

Additives may be mixed with the thermoplastic resin before the thermoplastic resin is formed into a resin powder, or may be mixed with a resin powder obtained.

The antioxidant is not particularly limited and may be appropriately selected depending on the intended purpose. The antioxidant encompasses so-called deterioration inhibitors and stabilizers. Examples of the antioxidant include hydrazide-based compounds and amide-based compounds serving as metal deactivators, phenol-based compounds (hindered phenol-based compounds) and amine-based compounds serving as radical scavengers, phosphate-based compounds and sulfur-based compounds serving as peroxide decomposers, and triazine-based compounds serving as ultraviolet absorbents. One of these antioxidants may be used alone or two or more of these antioxidants may be used in combination.

Among these antioxidants, combinations of radical scavengers and peroxide decomposers are preferable in terms of an anti-oxidation effect.

Examples of the flame retardant include: halogen-based, phosphorus-based, inorganic metal hydrate compound-based, nitrogen-based, and silicone-based flame retardants; and inorganic reinforcers. One of these flame retardants may be used alone or two or more of these flame retardants may be used in combination. When using two or more flame retardants in combination, combinations of halogen-based and inorganic metal hydrate compound-based flame retardants are preferable because flame retardancy can be increased.

Flame retardancy of the resin powder can be evaluated according to, for example, JIS K6911, JIS L1091 (ISO 6925), JIS C3005, and heat generation test (cone calorimeter).

The content of the flame retardant is preferably 1% by mass or greater but 50% by mass or less relative to the total amount of the resin powder, and more preferably 10% by mass or greater but 30% by mass or less because flame retardancy can be increased. When the content of the flame retardant is in the range described above, a sufficient flame retardancy can be realized.

Examples of the inorganic reinforcer include: inorganic fibrous substances such as glass fiber, carbon fiber, and aramid fiber; and inorganic layered silicates such as talc, mica, and montmorillonite. Addition of an inorganic reinforcer can also improve flame retardancy, and is preferable because reinforcement of physical properties and reinforcement of flame retardancy can both be satisfied.

The fluidizer has an effect of improving fluidity of the resin powder by coating a part or the whole of the surface of the resin powder. The resin powder having an improved fluidity is very effective because it improves surface smoothness of a recoated powder layer, has little voids between particles of the resin powder, and can better improve surface properties, dimensional accuracy, and strength of a three-dimensional object. The fluidizer can serve the effect by coating the surface of the resin powder, but may also be partially contained in the resin powder.

The average primary particle diameter of the fluidizer is preferably 500 nm or less, and more preferably 50 nm or less. The average primary particle diameter in this range is effective because the coating ratio of the fluidizer over the surface of the rein powder can be increased, making it possible to improve fluidity and reduce voids.

The fluidizer is not particularly limited and may be appropriately selected depending on the intended purpose.

Spherical particles formed of an inorganic material are preferable. Metal oxides are particularly preferable, and examples of metal oxides include silica, alumina, titania, zinc oxide, magnesium oxide, tin oxide, iron oxide, and copper oxide. Among these metal oxides, silica and titania are more preferable. One of these metal oxides may be used alone or two or more metal oxides may be used in combination.

A fluidizer having a hydrophobized surface is preferable. The method for hydrophobization is not particularly limited and a hitherto known method can be used. Examples of the hydrophobizing agent used for hydrophobization include silane coupling agents such as hexamethyl disilazane (HMDS) and dimethyl dicyclosilane (DMDS), and silicone oil treating agents such as dimethyl silicone oils and amino-modified silicone oils. Among these hydrophobizing agents, silane coupling agents are preferable.

The amount of treatment with the hydrophobizing agent is preferably 2 mg/m$^2$ or greater but 6 mg/m$^2$ or less per surface area of a particle.

The addition amount of the fluidizer needs at least to be an amount enough to coat the surface of a particle, and is preferably 0.1% by mass or greater but 10% by mass or less relative to the total amount of the resin powder. As the fluidizer, a particulate inorganic material having a volume average particle diameter less than 10 micrometers is preferable.

A hitherto known powder mixer is used in the step of mixing the fluidizer with the resin powder to coat the resin powder with the fluidizer. A powder mixer equipped with, for example, a jacket for adjustment of the internal temperature is preferable. For example, the rotation number, speed, time, and temperature of the mixer may be arbitrarily changed. Examples of the powder mixer include a V type mixer, a Henschel mixer, a rocking mixer, a nauta mixer, and a super mixer.

<<Physical properties of resin powder>>

It is preferable that the resin powder satisfy at least one selected from (1) to (3) below.

(1) In differential scanning calorimetry according to ISO 3146, Tmf1>Tmf2 is satisfied, where Tmf1 is the melting start temperature of an endothermic peak observed when the resin powder is heated at a rate of 10 degrees C/min to a temperature higher than the melting point by 30 degrees C and Tmf2 is the melting start temperature of an endothermic peak observed when, subsequently to the heating, the resin powder is cooled at a rate of 10 degrees C/min to -30 degrees C or lower and then heated at a rate of 10 degrees C/min to a temperature higher than the melting point by 30 degrees C. The melting start temperature of an endothermic peak is the temperature reached by descending by -15 mW from a straight line drawn in parallel with the x axis toward the lower temperature side from a temperature at which the quantity of heat is stabilized after endotherm at the melting point is completed.

(2) In differential scanning calorimetry according to ISO 3146, Cd1>Cd2 is satisfied, where Cd1 is the degree of crystallinity calculated from the quantity of energy at an endothermic peak observed when the resin powder is heated at a rate of 10 degrees C/min to a temperature higher than the melting point by 30 degrees C, and Cd2 is the degree of crystallinity calculated from the quantity of energy at an endothermic peak observed when, subsequently to the heating, the resin powder is cooled at a rate of 10 degrees C/min to -30 degrees C or lower and then heated at a rate of 10 degrees C/min to a temperature higher than the melting point by 30 degrees C.

(3) Cx1>Cx2 is satisfied, where Cx1 is the degree of crystallinity obtained by X-ray diffractometry, and Cx2 is the degree of crystallinity obtained by X-ray diffractometry when the resin powder is heated at a rate of 10 degrees C/min to a temperature higher than the melting point by 30 degrees C in a nitrogen atmosphere, then cooled at a rate of 10 degrees C/min to -30 degrees C or lower, and then heated at a rate of 10 degrees C/min to a temperature higher than the melting point by 30 degrees C.

(1) to (3) described above define the characteristics of the same resin powder from different viewpoints. (1) to (3) described above are mutually related.

[Method for measuring melting start temperature by differential scanning calorimetry according to the condition (1)]

The method for measuring the melting start temperature by differential scanning calorimetry (DSC) according to the condition (1) measures the melting start temperature (Tmf1) of an endothermic peak observed when the resin powder is heated at a rate of 10 degrees C/min to a temperature higher than the melting point by 30 degrees C using a differential scanning calorimeter (e.g., available from Shimadzu Corporation, DSC-60A) according to the measuring method compliant with ISO 3146 (Testing Methods for Transition Temperatures of Plastics, JIS K7121). Subsequently, the method measures the melting start temperature (Tmf2) of an endothermic peak observed when the resin powder is subsequently cooled at a rate of 10 degrees C/min to -30 degrees C or lower and then heated at a rate of 10 degrees C/min to a temperature higher than the melting point by 30 degrees C. The melting start temperature of an endothermic peak is the temperature reached by descending by -15 mW from a straight line drawn in parallel with the x axis toward the lower temperature side from a temperature at which the quantity of heat is stabilized after endotherm at the melting point is completed.

[Method for measuring degree of crystallinity by differential scanning calorimetry according to the condition (2)]

The method for measuring the degree of crystallinity by differential scanning calorimetry (DSC) according to the condition (2) measures the quantity of energy (quantity of heat of fusion) at an endothermic peak observed when the resin powder is heated at a rate of 10 degrees C/min to a temperature higher than the melting point by 30 degrees C, and can calculate the degree of crystallinity (Cd1) based on the quantity of heat of fusion relative to the quantity of heat of perfect crystal. Subsequently, the method measures the quantity of energy at an endothermic peak observed when the resin powder is cooled at a rate of 10 degrees C/min to -30 degrees C or lower and then heated at a rate of 10 degrees C/min to a temperature higher than the melting point by 30 degrees C, and can calculate the degree of crystallinity (Cd2) based on the quantity of heat of fusion relative to the quantity of heat of perfect crystal.

[Method for measuring degree of crystallinity with X-ray diffractometer according to the condition (3)]

The method for measuring the degree of crystallinity with an X-ray diffractometer according to the condition (3) can measure the degree of crystallinity (Cx1) of an obtained powder placed over a glass plate using an X-ray diffractometer including a two-dimensional detector (for example, available from Bruker Japan K.K., DISCOVER 8) at room temperature at 20 of from 10 through 40. Next, the method heats the powder at a rate of 10 degrees C/min in a DSC in a nitrogen atmosphere to a temperature higher than the melting point by 30 degrees C, maintains the powder at the temperature for 10 minutes, cools the powder at a rate of 10 degrees C/min to -30 degrees C, and returns the sample to room temperature. Then, the method can measure the degree of crystallinity (Cx2) in the same manner as measuring Cx1.

The particle diameter ratio (volume average particle diameter (Mv)/number average particle diameter (Mn)) of the volume average particle diameter (Mv) of the resin powder to the number average particle diameter (Mn) of the resin powder is preferably less than 2.0, more preferably 1.7 or less, yet more preferably 1.6 or less, particularly preferably 1.5 or less, and most preferably 1.4 or less. The particle diameter ratio (volume average particle diameter (Mv)/number average particle diameter (Mn)) is preferably 1.1 or greater, and more preferably 1.2 or greater. Moreover, the particle diameter ratio (volume average particle diameter (Mv)/number average particle diameter (Mn)) is preferably 1.1 or greater but 1.5 or less. When the particle diameter ratio (volume average particle diameter (Mv)/number average particle diameter (Mn)) of the volume average particle diameter (Mv) of the resin powder to the number average particle diameter (Mn) of the resin powder is 1.1 or greater but less than 1.5, it is possible to supply the powder at a high temperature, and suppress warpage of an object. The reason is as follows. When the ratio Mv/Mn is in the range described above, particles of the resin powder are uniform in shape and can be suppressed from aggregation of particles at a high temperature, making it possible to form a smooth flat surface even at a high temperature. A high temperature means a temperature in a range of from the melting point through a temperature higher than the melting point by 20 degrees C.

The particle diameter ratio (volume average particle diameter (Mv)/number average particle diameter (Mn)) of the volume average particle diameter (Mv) of the resin powder to the number average particle diameter (Mn) of the resin powder can be measured with, for example, a particle size distribution measuring instrument (available from MicrotracBel Corporation, MICROTRAC MT3300EXII).

The resin powder of the present disclosure preferably contains columnar particles as particles, and may contain particles that are not columnar particles.

<Columnar particles>

A columnar particle has a first surface, a second surface, and a side surface. A columnar particle preferably has a shape wherein an outer circumferential region of the first surface and an outer circumferential region of the second surface extends to the side surface, as far as observable with a scanning electron microscope (SEM).

-Shape of columnar particle-

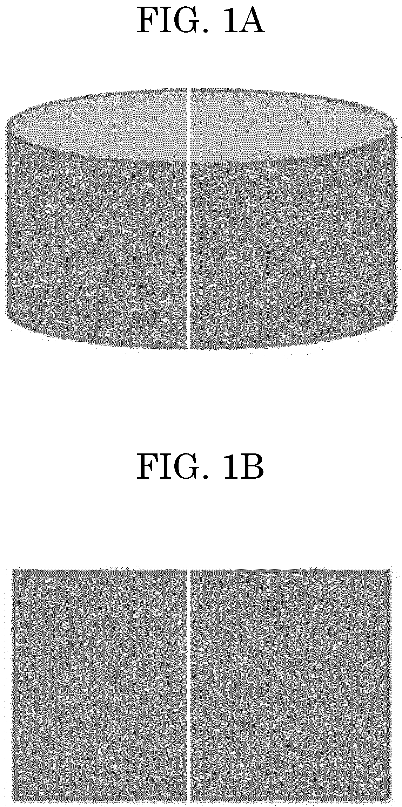

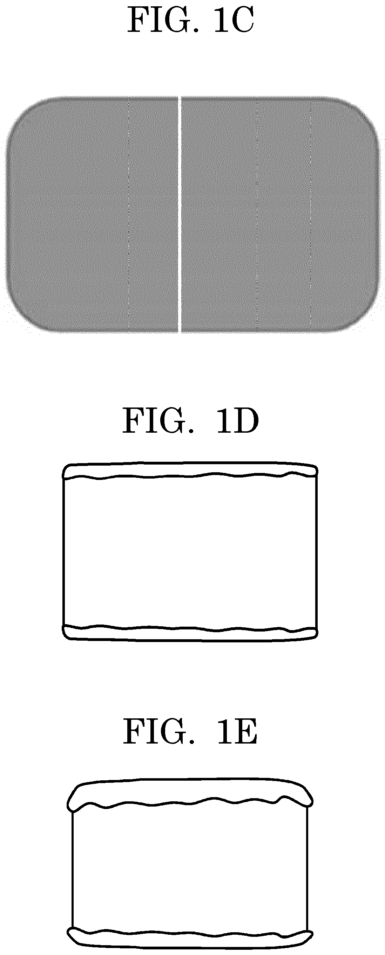

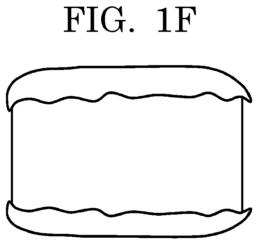

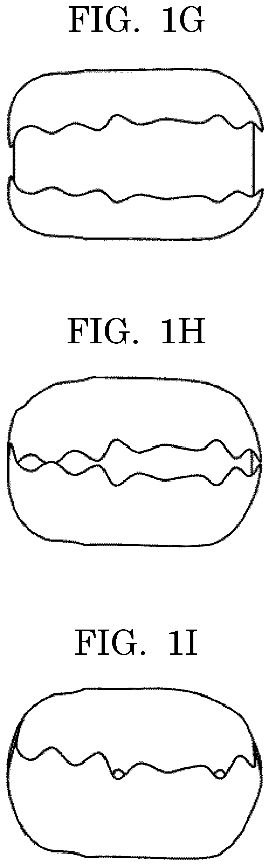

The shape of the columnar particle will be described with reference to FIG. 1A to FIG. 1I.

FIG. 1A is a schematic perspective view illustrating an example of a columnar particle. FIG. 1B is a schematic side view of the columnar particle illustrated in FIG. 1A. FIG. 1C is a schematic side view illustrating an example of a shape of a columnar particle having ends with no vertices. FIG. 1D to FIG. 1I are schematic side views of other examples of a shape of a columnar particle having ends with no vertices.

When the columnar particle illustrated in FIG. 1A is observed from a side, the columnar particle has a rectangular shape as illustrated in FIG. 1B, and has corner portions, i.e., vertices at four positions. FIG. 1C to FIG. 1I illustrate example shapes having no such vertices at the ends.

Presence or absence of vertices on a columnar particle can be judged based on a projected image of a side surface of the columnar particle. For example, the side surface of the columnar particle is observed with, for example, a scanning electron microscope (instrument name: S4200, available from Hitachi, Ltd.), to capture the side surface in the form of a two-dimensional image. In this case, the projected image has a quadrangular shape, of which portions formed by respective pairs of adjoining two sides are referred to as ends. That being the case, any shape formed only of adjoining two straight lines has a corner, which is a vertex. As in FIG. 1C to FIG. 1I, when an end is formed by an arc, the end does not have a vertex.

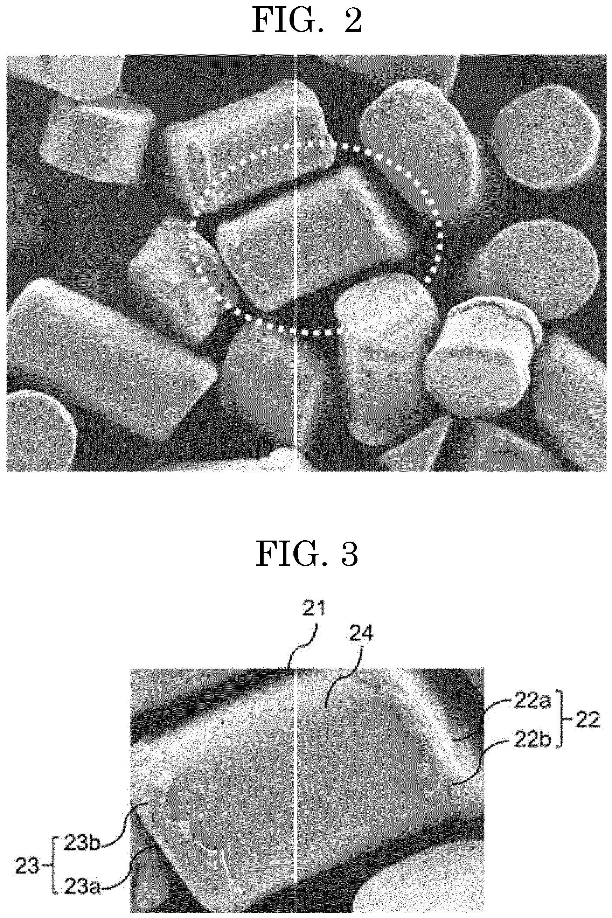

FIG. 2 is an image illustrating an example of the resin powder containing columnar particles. FIG. 3 illustrates the columnar particle of FIG. 2 encircled with a dotted line circle. FIG. 2 and FIG. 3 are images observed with a scanning electron microscope (SEM).

As illustrated in FIG. 3, the columnar particle 21 has a first surface 22, a second surface 23 and a side surface 24.

The first surface 22 includes a first facing surface 22a and an outer circumferential region 22b of the fist surface, where the outer circumferential region 22b has a shape extending along the side surface 24. The outer circumferential region 22b of the first surface is a surface continuous from the first facing surface 22a via a curved surface, and is approximately orthogonal to the first facing surface 22a.

The second surface 23 includes a second facing surface 23a facing the first facing surface 22a and an outer circumferential region 23b of the second surface, where the outer circumferential region 23b has a shape extending along the side surface 24. The outer circumferential region 23a of the second surface is a surface continuous from the second facing surface 23a via a curved surface, and is approximately orthogonal to the second facing surface 23a.

The side surface 24 adjoins the first surface 22 and the second surface 23. The outer circumferential region 22b of the first surface and the outer circumferential region 23b of the second surface extend over the side surface 24.

The shape of the outer circumferential region 22b of the first surface and the outer circumferential region 23b of the second surface (hereinafter, may also be referred to as "outer circumferential region") needs at least to be a shape distinguishable from the side surface 24 in a scanning electron microscope (SEM) image. Examples of the shape of the outer circumferential region include a shape of the outer circumferential region partially integrated with the side surface 24, a shape of the outer circumferential region contacting the side surface 24, and a shape of the outer circumferential region having a space between the outer circumferential region and the side surface 24. It is preferable that the outer circumferential region 22b of the first surface and the outer circumferential region 23b of the second surface be provided to have an in-plane direction approximately equal to the in-plane direction of the side surface 24.

As illustrated in FIG. 3, the outer circumferential region 22b of the first surface and the outer circumferential region 23b of the second surface extend along the side surface 24 and are located over the side surface 24. The characteristic structure of the first surface and second surface, i.e., the structure of covering the contacting regions between the side surface 24 and the outer circumferential region 22b of the first surface and the outer circumferential region 23b of the second surface is referred to as bottle cap shape.

In the present disclosure, "the outer circumferential region of the first surface" and "the outer circumferential region of the second surface" refer to regions of a columnar particle included in a range observed with a scanning electron microscope (SEM). That is, regions of a columnar particle not included in a range observed with a scanning electron microscope (SEM) are not included in "the outer circumferential region of the first surface" and "the outer circumferential region of the second surface".

In the present disclosure, "the shape of the outer circumferential region of the first surface extending along the side surface" means a shape where "the whole ((but as far as included in a range observed with a SEM))" of the outer circumferential region of the first surface extends along the side surface. "The shape of the outer circumferential region of the first surface extending along the side surface" does not include a shape where only a part of the outer circumferential region of the first surface extends along the side surface.

"The shape of the outer circumferential region of the second surface extending along the side surface" means a shape where "the whole ((but as far as included in a range observed with a SEM))" of the outer circumferential region of the second surface extends along the side surface. "The shape of the outer circumferential region of the second surface extending along the side surface" does not include a shape where only a part of the outer circumferential region of the second surface extends along the side surface.

The outer circumferential region of the first surface and the outer circumferential region of the second surface have shapes as extensions of the first surface and the second surface along the side surface. Therefore, the outer circumferential region of the first surface and the first facing surface, and the outer circumferential region of the second surface and the second facing surface are smoothly continuous with each other via curved surfaces respectively. Providing the outer circumferential region of the first surface and the outer circumferential region of the second surface to make a columnar particle corner-free makes it possible to increase the filling density of the resin powder containing columnar particles and improve the tensile strength of a three-dimensional object.

Making a columnar particle corner-free makes it possible to improve fluidity of the resin powder containing columnar particles, suppress movement failure of the resin powder during production of a three-dimensional object, and improve the tensile strength of a three-dimensional object. The resin powder, which is in the form of columnar particles having a shape wherein the whole ((but as far as included in a range observed with a scanning electron microscope (SEM))) of the outer circumferential region of the first surface and the whole ((but as far as included in a range observed with a scanning electron microscope (SEM))) of the outer circumferential region of the second surface extend along the side surface, can achieve filling density of columnar particles and fluidity of columnar particles needed for use in production of a three-dimensional object.

When seen in the height direction of a columnar particle, the shortest portions of the outer circumferential region of the first surface and the outer circumferential region of the second surface preferably have a length of 1 micrometer or greater, more preferably 3 micrometers or greater, and yet more preferably 5 micrometers or greater. When the shortest portions of the outer circumferential region of the first surface and the outer circumferential region of the second surface in the height direction of a columnar particle have a length of 1 micrometer or greater, the curved surfaces between the outer circumferential region of the first surface and the first facing surface and between the outer circumferential region of the second surface and the second facing surface become smoother, making it possible to increase the filling density of the resin powder containing columnar particles and improve the tensile strength of a three-dimensional object. Smoother curved surfaces can improve fluidity of the resin powder containing columnar particles, suppress movement failure of the resin powder during production of a three-dimensional object, and improve the tensile strength of a three-dimensional object.

When seen in the height direction of a columnar particle, the longest portions of the outer circumferential region of the first surface and the outer circumferential region of the second surface preferably have a length of 10 micrometers or greater and more preferably 15 micrometers or greater. All of the lengths mentioned above are lengths in a range observed with a scanning electron microscope (SEM).

The shape of a columnar particle is not particularly limited and may be appropriately selected depending on the intended purpose. Examples of the shape of a columnar particle include three-dimensional shapes such as an approximately circular cylindrical shape and an approximately prismatic shape. Among these shapes, an approximately prismatic shape is preferable. The approximately circular cylindrical shape and the approximately prismatic shape encompass three-dimensional shapes having the outer circumferential region of the first surface and the outer circumferential region of the second surface. The three-dimensional shape of a columnar particle determines the shapes of the first facing surface and the second facing surface of the columnar particle. For example, when a columnar particle is observed to have no line (corner) running in the height direction of the columnar particle but is observed to have a smooth surface uniformly, the columnar particle is an approximately circular cylinder and the first facing surface and the second facing surface have an approximately circular shape. When a columnar particle is observed to have a plurality of surfaces segmented by lines (corners) running in the height direction of the columnar particle, the columnar particle is an approximate prism, and the first facing surface and the second facing surface have an approximately polygonal shape.

A columnar particle has the first facing surface and the second facing surface, which are surfaces facing each other. The first facing surface may be inclined with respect to the second facing surface, but it is preferable that the first facing surface be not almost inclined but be approximately parallel. When the first facing surface is approximately parallel with the second facing surface, the resin powder containing columnar particles can have an improved fluidity.

The ratio of the length of the longest straight line present in the first facing surface or the second facing surface of a columnar particle to the height of the columnar particle is preferably 0.5 times or greater but 5.0 times or less, more preferably 0.7 times or greater but 2.0 times or less, an yet more preferably 0.8 times or greater but 1.5 times or less.

--Approximately circular cylindrical shape--

The shape of an approximately circular cylinder is not particularly limited and may be appropriately selected depending on the intended purpose. Examples of the shape of an approximately circular cylinder include an approximately true-circular cylindrical particle of which first facing surface and second facing surface have an approximately true-circular shape, and an approximately elliptic cylindrical particle of which first facing surface and second facing surface have an approximately elliptic shape. Of these shapes, an approximately true-circular cylindrical particle is preferable. The circle of the approximately circular cylindrical particle may be partially chipped. An approximate circle means a circle having a ratio (longer diameter/shorter diameter) of 1 or greater but 10 or less as a ratio of the longer diameter to the shorter diameter.

The first facing surface and the second facing surface may have a slight area difference. The circle diameter ratio (larger surface/smaller surface) between the larger surface and the smaller surface is preferably 1.5 times or less, and because a greater uniformity in shape can increase the density, more preferably 1.1 times or less.

The diameter of an approximately circular cylindrical particle is not particularly limited, may be appropriately selected depending on the intended purpose, and is preferably 5 micrometers or greater but 100 micrometers or less. When the circle of the approximately circular cylindrical particle is an approximate ellipse, the diameter refers to the longer diameter.

The height of an approximately circular cylindrical particle is not particularly limited, may be appropriately selected depending on the intended purpose, and is preferably 5 micrometers or greater but 100 micrometers or less.

--Approximately prismatic shape--

The shape of an approximate prism is not particularly limited and may be appropriately selected depending on the intended purpose. Examples of the shape of an approximate prism include an approximately parallelepiped shape, an approximately cubic shape, an approximately triangular prism, and an approximate hexagonal prism of which first facing surface and second facing surface have a polygonal shape. Among these shapes, an approximately hexagonal prism is preferable, and an approximately regular hexagonal prism is more preferable. Particles having an approximately prismatic shape can be densely packed without voids, and can improve the tensile strength of a three-dimensional object to be obtained. The approximately prismatic shape may be partially chipped.

The first facing surface and the second facing surface may have slightly different areas. However, a ratio (larger surface/smaller surface) of the average length of the sides of the polygonal shape of the larger surface to the average length of the sides of the polygonal shape of the smaller surface is preferably 1.5 times or less, and because uniformity in shape can increase the density, more preferably 1.1 times or less.

The length of the longest straight line present in the first facing surface or the second facing surface of an approximately prismatic shape is not particularly limited, may be appropriately selected depending on the intended purpose, and is preferably 5 micrometers or greater but 100 micrometers or less.

The height of an approximately prismatic shape is not particularly limited, may be appropriately selected depending on the intended purpose, and is preferably 5 micrometers or greater but 100 micrometers or less.

The present disclosure also includes a columnar particle having a collapsed shape resulting from the resin being softened during cutting in a manner that the sides constituting the height between the first facing surface and the second facing surface become arced (e.g., a "barrel shape" when the columnar particle is a circular cylindrical shape). However, it is preferable that the sides constituting the height between the first facing surface and the second facing surface of a columnar particle be straight lines, because particles having arced sides mutually repel and open a space between each other, making it impossible to densely pack the powder.

-Content of columnar particles-

The content (number base) of columnar particles in the resin powder is preferably 50% or greater and more preferably 70% or greater relative to the resin powder.

A greater content of columnar particles having the outer circumferential region of the first surface and the outer circumferential region of the second surface described above in the resin powder enables a higher filling density of the resin powder containing columnar particles, making it possible to improve the tensile strength of a three-dimensional object. Moreover, a greater content of columnar particles having the outer circumferential region of the first surface and the outer circumferential region of the second surface also enables a better fluidity of the resin powder containing columnar particles, making it possible to suppress movement failure of the resin powder during production of a three-dimensional object and improve the tensile strength of a three-dimensional object.

A specific method for calculating the content of columnar particles is performed in the manner described below. That is, an image of the resin powder is captured with a scanning electron microscope (SEM) at a magnification of $\times 150$, the number of resin powder particles and the number of columnar particles are obtained from the captured image, and the number of columnar particles divided by the number of resin powder particles is multiplied by 100. The content of columnar particles is calculated in this way.

The SEM magnification can be appropriately changed depending on the size of the resin powder particles. When obtaining the number of resin powder particles and the number of columnar particles from the SEM image, in the present disclosure, only such resin powder particles and columnar particles as having a size of 20 micrometers or greater at the longest portion are the target of number counting. The number of resin powder particles when calculating the content of columnar particles should be 100 or more.

The content (number base) of columnar particles having an approximately prismatic shape in the resin powder is preferably 40% or greater relative to the resin powder.

A greater content of columnar particles having an approximately prismatic shape having the outer circumferential region of the first surface and the outer circumferential region of the second surface described above in the resin powder enables a higher filling density of the resin powder containing columnar particles and a greater tensile strength of a three-dimensional object to be obtained.

The material of the columnar particles is not particularly limited and may be appropriately selected depending on the intended purpose. It is preferable that the columnar particles have the same physical properties as the resin powder of the present disclosure.

Applications of the resin powder of the present disclosure are not particularly limited and may be appropriately selected depending on the intended purpose. The resin powder of the present disclosure can be suitably used in various three-dimensional object producing methods using resin powders, such as SLS methods, SMS methods, high speed sintering (HSS) methods, and binder jetting (BJ) methods.

[Method for producing resin powder]

It is preferable to produce the resin powder through a fiber producing step of producing columnar fibrous materials from, for example, pellets containing the materials constituting the resin powder, an integrating step of integrating a plurality of produced fibrous materials to produce an integrated material, a cutting step of cutting the integrated material to obtain cut products, and a stirring step of stirring the cut products.

In the method for producing the resin powder, the cutting step is performed after the fibers are transformed into an integrated product in the integrating step in a manner that the positions and direction of the fibers are fixed. Therefore, it is possible to make the cutting width and cutting direction of the resin powder uniform and obtain columnar particles uniform in shape. That is, existing methods of, for example, transferring fibers to a cutting unit while clamping the fibers with a movable clamp and cutting the resin fibers to obtain a powder cannot sufficiently fix the fibers, leading to variation in the cutting width and cutting direction due to displacement of the fibers during cutting. Variation in the cutting width and cutting direction can generate multitude of cut products having different sizes and shapes.

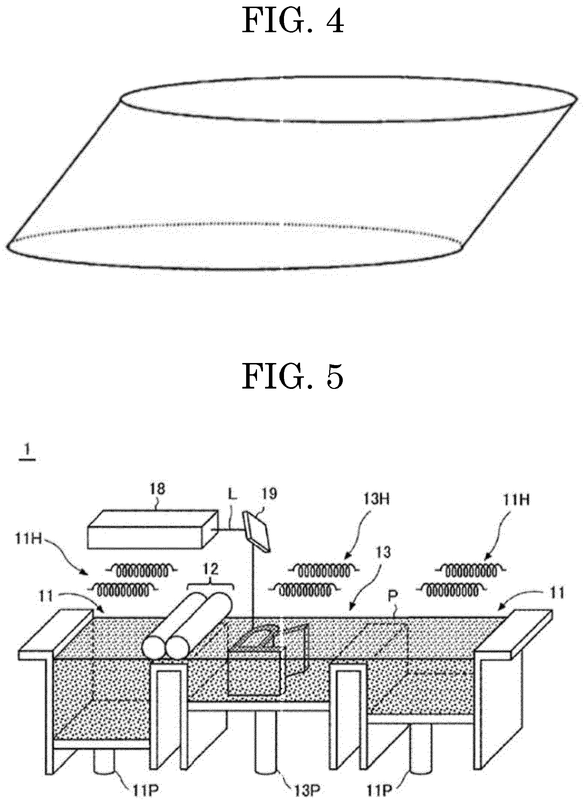

For example, variation in the cutting width and cutting direction can generate multitude of particles having unexpected shapes like a cut product illustrated in FIG. 4 formed from diagonal cutting of a circular cylindrical resin. Even when such cut products having asymmetric three-dimensional shapes are stirred, it is difficult to obtain multitude of columnar particles having a shape wherein the whole ((but as far as included in a range observed with a SEM)) of the outer circumferential region of the first surface and the whole ((but as far as included in a range observed with a SEM)) of the outer circumferential region of the second surface extend along the side surface. Cut products nonuniform in size receive an excessive force and flatten in the stirring step, and cut products larger than other cut products cannot have a desired shape.

Therefore, it is preferable to produce the resin powder through a fiber producing step, an integrating step, a cutting step, and a stirring step, and it is preferable to produce the resin powder through an integrating step of integrating fibers into a sheet shape by heating and pressurization.

<Fiber producing step>

The fiber producing step is a step of transforming a resin into fibers to produce fibrous materials.

In the fiber producing step, it is preferable to draw a resin melt liquid into fibrous shapes using an extruder while stirring the resin at a temperature higher than the melting point by 30 degrees C or more. It is preferable to draw the resin melt liquid to fibers having a size that is one time or more but ten times or less longer. Here, it is possible to define the shape of the cross-section of the fibers based on the shape of nozzle ports of the extruder. When making the shape of the cross-section circular, it is preferable that the nozzle ports also have a circular shape. In the fiber producing step, it is possible to control crystallinity of the resin.

<Integrating step>

The integrating step is a step of integrating a plurality of fibrous materials disposed in the same direction to produce an integrated product.

In the integrating step, it is preferable to produce an integrated product by integrating a plurality of fibrous materials disposed in the same direction by heating and pressurization.

In the integrating step, a plurality of fibrous materials produced in the fiber producing step are disposed side by side in a manner to extend in the same direction and integrated. Examples of the integrating method include a method of integrating fibrous materials into a sheet shape by heating and pressurization, a method of cooling the fibers by application of water, and fixing the fibers in ice to integrate the fibers. Of these methods, the method of integrating fibrous materials into a sheet shape by heating and pressurization is preferable.

The integrating step can bring the fibrous materials into a fixed state.

When integrating a plurality of fibrous materials disposed in the same direction into a sheet shape by heating and pressurization, the heating temperature to be applied is different depending on the kind of the resin used, but is preferably lower than or equal to the melting point of the fibrous materials and preferably a temperature higher than or equal to a temperature lower than the melting point of the fibrous materials by 100 degrees C. The pressure to be applied is preferably 10 MPa or lower. The heating temperature and pressure are preferably in ranges in which the integrated fibers will be separated through the next cutting step.

"Heating and pressurization" are preferably a heating step and a pressurization step that are performed simultaneously, but may also be a heating step and a pressurization step that are not performed simultaneously, such as a pressurization step performed after a heating step in a state that residual heat of the heating step is present.

The shape of the integrated product is not limited to a sheet shape or to any other particular shape so long as the next cutting step can be performed appropriately. The direction in which the fibers are disposed needs not be the completely same direction, but may be an approximately same direction.

When the cross-sectional shape of the fibrous materials obtained in the fiber producing step is circular, the fibrous materials are partially or wholly deformed due to heating and pressurization in the integrating step, and the cross-sectional shape of the fibrous materials become polygonal. As a result, an integrated product of fibrous materials having polygonal cross-sectional shapes can be produced.

<Cutting step>

The cutting step is a step of cutting the integrated product to obtain cut products.

In the cutting step, it is preferable to produce cut products by continuously cutting the integrated product produced in the integrating step.

Examples of the cutting unit include a cutting device having blades on both of the upper and lower sides such as a guillotine type, a cutting device configured to cut a thing with a lower plate and an upper blade such as a so-called lever shear type, and a cutting device configured to cut a thing with, for example, a $CO_2$ laser. Using these cutting devices, it is possible to cut the fibers constituting the integrated product into shapes having cross-sections perpendicular to the longer dimension of the fibers.

The cutting width by the cutting device is not particularly limited, may be appropriately selected depending on the intended purpose, and is preferably 5.0 micrometers or greater but 100.0 micrometers or less.

The cutting speed of the cutting device is not particularly limited, may be appropriately selected depending on the intended purpose, and is preferably 10 spm (shots per minute) or higher but 1,000 spm or lower.

<Other steps>

Other steps are not particularly limited and may be appropriately selected depending on the intended purpose. Examples of other steps include a stirring step and a controlling step.

The stirring step can produce the outer circumferential region of the first surface and the outer circumferential region of the second surface.

In the stirring step, it is preferable to stir the cut products produced in the cutting step and melt the surface of the cut products by mechanical friction to produce columnar particles.

The stirring method is not particularly limited and may be appropriately selected depending on the intended purpose. Examples of the stirring method include various spheronizing methods such as a method of making cut products collide on each other, and a method of making any other matter than cut products collide on cut products.

The rotation speed of stirring is not particularly limited, may be appropriately selected depending on the intended purpose, and is preferably 500 rpm or higher but 10,000 rpm or lower.

The rotation time during stirring is not particularly limited, may be appropriately selected deepening on the intended purpose, and is preferably 1 minute or longer but 60 minutes or shorter.

-Applications of resin powder-

The resin powder of the present disclosure is suitably used in various three-dimensional object producing methods such as SLS methods, SMS methods, multi jet fusion (MJF) methods, high speed sintering (HSS) methods, and binder jetting (BJ) methods.

The resin powder of the present disclosure is suitably used in, for example, surface modifiers, spacers, lubricants, paints, grindstones, additives, secondary battery separators, foods, cosmetics, and garment, in addition to three-dimensional object producing methods. Moreover, the resin powder may be used as materials and substitute materials for metals used in automobiles, precision equipment, semiconductors, aerospace, and medical care.

(Resin powder for producing three-dimensional object)

A resin powder for producing a three-dimensional object of the present disclosure contains the resin powder of the present disclosure.

The resin powder for producing a three-dimensional object of the present disclosure is the same as the resin powder of the present disclosure. Therefore, description on the resin powder for producing a three-dimensional object will be skipped. (Three-dimensional object producing method and three-dimensional object producing apparatus)

A three-dimensional object producing method of the present disclosure includes a layer forming step of forming a powder material layer using a resin powder, and an object forming layer forming step of curing the powder material layer to form an object forming layer, and further includes other steps as needed. The resin powder is a resin powder described below. When the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent (tan$\delta$) of 18.0 or greater.

A three-dimensional object producing apparatus of the present disclosure includes a layer forming unit configured to form a powder material layer using a resin powder and an object forming layer forming unit configured to cure the powder material layer to form an object forming layer, and further includes other units as needed. The resin powder is a resin powder described below. When the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent (tan$\delta$) of 18.0 or greater.

The three-dimensional object producing method of the present disclosure can be suitably performed by the three-dimensional object producing apparatus of the present disclosure. The layer forming step can be suitably performed by the layer forming unit. The object forming layer forming step can be suitably performed by the object forming layer forming unit. The other steps can be suitably performed by the other units.

That is, the three-dimensional object producing method of the present disclosure is the same as using and carrying out the three-dimensional object producing apparatus of the present disclosure. The three-dimensional object producing apparatus of the present disclosure is the same as carrying out the three-dimensional object producing method of the present disclosure.

Therefore, the three-dimensional object producing method of the present disclosure will also be specified in detail through description of the three-dimensional object producing apparatus of the present disclosure.

<Layer forming step and layer forming unit>

The layer forming step is a step of forming a powder material layer using a resin powder, wherein when the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent (tan$\delta$) of 18.0 or greater.

The layer forming unit is a unit configured to form a powder material layer using a resin powder, wherein when the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent (tan$\delta$) of 18.0 or greater.

The layer forming unit is not particularly limited and may be appropriately selected depending on the intended purpose. Examples of the layer forming unit include a roller, a blade, and a brush, and combinations thereof.

The resin powder is the same as the resin powder of the present disclosure.

<Object forming layer forming step and object forming layer forming unit>

The object forming layer forming step is a step of curing the powder material layer to form an object forming layer.

The object forming layer forming unit is a unit configured to cure the powder material layer to form an object forming layer.

The object forming layer forming unit is not particularly limited and may be appropriately selected depending on the intended purpose. Examples of the object forming layer forming unit include a $CO_2$ laser, an infrared irradiator, a microwave generator, a radiation heater, and a LED lamp, and an electromagnetic irradiator, which is a combination thereof. One of these object forming layer forming units may be used alone or two or more of these object forming layer forming units may be used in combination.

<Other steps and other units>

Other steps are not particularly limited and may be appropriately selected depending on the intended purpose. Examples of the other steps include a controlling step.

Other units are not particularly limited and may be appropriately selected depending on the intended purpose. Examples of the other units include a controlling unit.

FIG. 5 is a schematic view illustrating a three-dimensional object producing apparatus of an embodiment of the present disclosure. The three-dimensional object producing apparatus illustrated in FIG. 5 includes a supplying tank 11 serving as a containing unit configured to contain the resin powder P for producing an object, a roller 12 configured to supply the resin powder P contained in the supplying tank 11 to a laser scanning space 13, a laser scanning space 13 in which the resin powder P supplied by the roller 12 is distributed and scanned with laser L, an electromagnetic irradiator 18 serving as an irradiator of the laser L serving as electromagnetic rays, and a reflection mirror 19 configured to reflect the laser L emitted by the electromagnetic irradiator 18 to predetermined position of the laser scanning space 13.

The three-dimensional object producing apparatus 1 includes heaters 11H and 13H configured to heat the resin powder P contained in the supplying tank 11 and the laser scanning space 13 respectively.

While the electromagnetic irradiator 18 is emitting the laser L, the reflection surface of the reflection mirror 19 moves in accordance with two-dimensional data of a three-dimensional (3D) model. The two-dimensional data of a 3D model represents the shape of each cross-section obtained when the 3D model is sliced at predetermined intervals. Hence, by the angle for reflecting the laser L being changed, the portion in the laser scanning space 13 corresponding to the portion represented by the two-dimensional data is selectively irradiated with the laser L. The resin powder at the position irradiated with the laser L melts and sinters to form a layer. That is, the electromagnetic irradiator 18 serves as the layer forming unit configured to form each layer of a three-dimensional object using the resin powder P.

The supplying tank 11 and the laser scanning space 13 of the three-dimensional object producing apparatus 1 include pistons 11P and 13P. The pistons 11P and 13P are configured to move the supplying tank 11 and the laser scanning space 13 upward or downward in the layer lamination direction of a three-dimensional object, when layer formation is completed. This makes it possible for the resin powder P for use in formation of a new layer to be newly supplied from the supplying tank 11 to the laser scanning space 13.

The three-dimensional object producing apparatus 1 selectively melts the resin powder P by changing the position to be irradiated with the laser by means of the reflection mirror 19. The present disclosure is not limited to this embodiment.

The resin powder of the present disclosure is suitably used in a three-dimensional object producing apparatus of a selective mask sintering (SMS) type. The SMS method produces an object in a manner that, for example, the resin powder partially masked with a shielding mask is irradiated with electromagnetic rays so that an unmasked portion is irradiated with electromagnetic rays such as infrared rays and the resin powder is selectively melted. When employing a SMS process, it is preferable that the resin powder P contain one or more kinds selected from heat absorbents and dark materials for enhancing an infrared absorbing property. Examples of heat absorbents and dark materials include carbon fiber, carbon black, carbon nanotube, and cellulose nanofiber. The SMS process described in, for example, U.S. Patent No. 6,531,086 can be suitably employed.

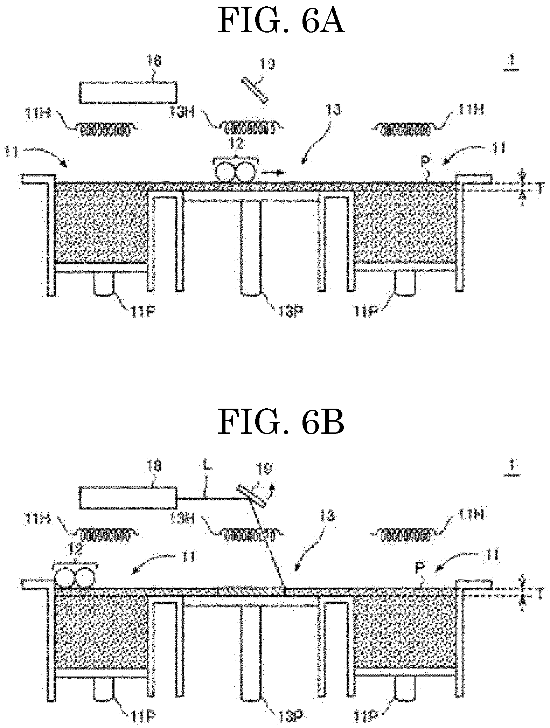

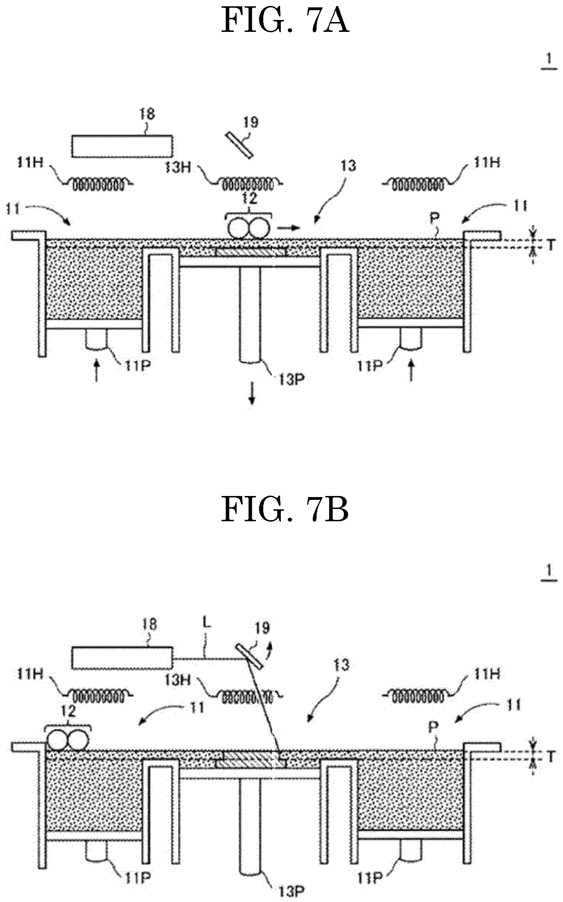

FIG. 6A and FIG. 6B, and FIG. 7A and FIG. 7B are schematic views illustrating examples of the three-dimensional object producing method of the present disclosure.

The heater 11H heats the resin powder P contained in the supplying tank 11. The temperature of the supplying tank 11 is preferably the highest possible temperature lower than or equal to the melting point of the resin powder P in terms of suppressing warpage of the resin powder P when melting the resin powder P by laser irradiation, but is preferably a temperature lower than the melting point of the resin powder P by 10 degrees C or more in terms of preventing melting of the resin powder P in the supplying tank 11.

As illustrated in FIG. 6A, in an example of a supplying step, the engine (i.e., a drive source for, for example, the roller) of the three-dimensional object producing apparatus 1 drives the roller 12 to supply the resin powder P in the supplying tank 11 to the laser scanning space 13 and level the ground to form a powder layer having a thickness T for one layer.

The heater 13H heats the resin powder P supplied to the laser scanning space 13. The temperature of the laser scanning space 13 is preferably the highest possible temperature in terms of suppressing warpage of the resin powder P when melting the resin powder P by laser irradiation, but is preferably a temperature lower than the melting point of the resin powder P by 5 degrees C or more in terms of preventing melting of the resin powder P in the laser scanning space 13.

The engine of the three-dimensional object producing apparatus 1 receives input of a plurality of two-dimensional data generated from a three-dimensional (3D) model.

As illustrated in FIG. 6B, the engine of the three-dimensional object producing apparatus 1 causes the electromagnetic irradiator 18 to emit laser while causing the reflection surface of the reflection mirror 19 to move in accordance with the bottommost two-dimensional data of the plurality of two-dimensional data.

The output power of the laser is not particularly limited, may be appropriately selected depending on the intended purpose, and is preferably 10 watts or higher but 150 watts or lower. By laser irradiation, the resin powder P in the powder layer at the positions corresponding to the pixels represented by the bottommost two-dimensional data melts. When laser irradiation is completed, the melted resin cures and forms a sintered layer having the shape represented by the bottommost two-dimensional data.

The thickness T of the sintered layer is not particularly limited, and is preferably 10 micrometers or greater, more preferably 50 micrometers or greater, and yet more preferably 100 micrometers or greater as an average. The thickness T of the sintered layer is not particularly limited, and is preferably less than 200 micrometer, more preferably less than 150 micrometers, and yet more preferably less than 120 micrometers as an average.

As illustrated in FIG. 7A, when the bottommost sintered layer is formed, the engine of the three-dimensional object producing apparatus 1 causes the piston 13P to move the laser scanning space 13 downward by a distance corresponding to the thickness T for one layer in a manner that an object forming space having a thickness T for one layer is formed in the laser scanning space 13. The engine of the three-dimensional object producing apparatus 1 moves the piston 11P upward in order to enable the new resin powder P to be supplied. Then, as illustrated in FIG. 7A, the engine of the three-dimensional object producing apparatus 1 drives the roller 12 to supply the resin powder P in the supplying tank 11 to the laser scanning space 13 and level the ground, to form a powder layer having the thickness T for one layer.

As illustrated in FIG. 7B, the engine of the three-dimensional object producing apparatus 1 causes the electromagnetic irradiator 18 to emit laser while causing the reflection surface of the reflection mirror 19 to move in accordance with the second bottommost two-dimensional data of the plurality of two-dimensional data. As a result, the resin powder P in the powder layer at the positions corresponding to the pixels represented by the second bottommost two-dimensional data melts. When laser irradiation is completed, the melted resin cures and forms a sintered layer having the shape represented by the second bottommost two-dimensional data in a state of being laminated over the bottommost sintered layer.

Sintered layers are laminated through repetition of the supplying step, the layer forming step, and the object forming layer forming step described above. When object production based on all of the plurality of two-dimensional data is completed, a three-dimensional object having the same shape as the 3D model is obtained.

(Three-dimensional object)

A three-dimensional object can be suitably produced according to the three-dimensional object producing method of the present disclosure using the resin powder of the present disclosure.

EXAMPLES

The present disclosure will be described below by way of Examples. The present disclosure should not be construed as being limited to these Examples.

(Example 1)

A polybutylene terephthalate (PBT) resin (product name: NOVADURAN 5505S, obtained from Mitsubishi Engineering-Plastics Corporation, with a melting point of 218 degrees C) was stirred at a temperature higher than the melting point by 30 degrees C, and then the resin melt liquid was drawn into a fibrous shape using an extruder (obtained from the Japan Steel Works, Ltd.) having circular nozzle ports. The resin melt liquid was drawn to fibers having a size four times longer so that fibers were adjusted to a fiber diameter of 55 micrometers. Subsequently, the formed fibers were disposed side by side in a manner to extend in the same direction, and integrated into a sheet shape by heating at a temperature (148 degrees C) lower than the melting point of the PBT resin by 70 degrees C and pressurization at 1.5 MPa. Each fiber in the integrated product integrated to have a sheet shape had an approximately polygonal cross-sectional shape.

Next, the integrated product integrated to have a sheet shape was fixed on a lever shear-type cutting device (obtained from Ogino Seiki Co., Ltd., NJ SERIES 1200 TYPE) using a fixing jig, and cut with adjustment of the cutting width to 50 micrometers and the cutting speed to 280 spm (shots per minute) (fiber method). Subsequently, the obtained cut products were processed with a multi-purpose mixer (obtained from Nippon Coke & Engineering Co., Ltd.) at a rotation speed of 5,000 rpm for 10 minutes in order to melt the surface of the cut products by mechanical friction. In the way described above, a resin powder of Example 1 was obtained.

(Examples 2 to 17 and Comparative Examples 1 to 3)

Resin powders of Examples 2 to 17 and Comparative Examples 1 to 3 were obtained in the same manner as in Example 1, except that unlike in Example 1, the materials and the particle producing method were changed as presented in Table 1-1. In Table 1-1, the parenthesized values in the "materials" field represent the content ratio (% by mass) of the materials.

In Example 15, a resin powder was obtained in the same manner as in Example 1, except that a product obtained by maintaining (annealing) the resin having the composition presented in Example 15 in a vacuum at 210 degrees C for 10 hours was used.

The kinds of resins used are as follows.

- Polybutylene terephthalate (PBT) resin (product name: NOVADURAN 5505S, obtained from Mitsubishi Engineering-Plastics Corporation, with a melting point of 218 degrees C)
- Polybutylene terephthalate (PBT) resin (product name: NOVADURAN 5605, obtained from Mitsubishi Engineering-Plastics Corporation, with a melting point of 206 degrees C)
- Polybutylene terephthalate (PBT) resin (product name: NOVADURAN 5020, obtained from Mitsubishi Engineering-Plastics Corporation, with a melting point of 224 degrees C and a glass transition temperature of 43 degrees C)
- Polyether ether ketone (PEEK) resin (product name: HT P22PF, obtained from VICTREX PLC, with a melting point of 343 degrees C and a glass transition temperature of 143 degrees C)
- Polyphenylene sulfide (PPS) resin (product name: TORALINA A900, obtained from Toray Industries, Inc., with a melting point of 280 degrees C)

"Particle shape", "equivalent circle diameter (micrometer)", "volume average particle diameter (Mv)/number average particle diameter (Mn)", "melting point (Tm) (degree C)", "crystallization temperature (Tc) (degree C)", "viscosity (Pa·s)", and "tanδ at melting point" of each obtained resin powder were measured in the manners described below. The results are presented in Table 1-2.

<Particle shape>

An image of the obtained resin powder was captured with a scanning electron microscope (SEM) (obtained from JEOL Ltd., JSM-7800FPRIME) at a magnification of ×150. Among the particles of the resin powder in the captured SEM image, particles that had a first surface, a second surface, and a side surface and had a shape wherein the whole ((but as far as included in a range observed in the SEM image)) of the outer circumferential region of the first surface and the whole ((but as far as included in a range observed in the SEM image)) of the outer circumferential region of the second surface extended along the side surface were judged as columnar particles.

Next, the side surface of a particle of the resin powder judged as a columnar particle was observed. When the columnar particle was observed to have a plurality of surfaces segmented by lines (corners) running in the height direction of the columnar particle, the first facing surface and the second facing surface were judged as having an approximately polygonal shape.

When the columnar particle was observed not to have lines running in the height direction of the columnar particle but to have a smooth surface uniformly, the first facing surface and the second facing surface were judged as having an approximately circular shape (an approximately true-circular shape or an approximately elliptic shape).

The result is presented in Table 1-2.

"Crushed" in Table 1-2 means that the resin power was crushed to become a flaky shape (a rugged distorted shape).

<Equivalent circle diameter>

The projected area of the obtained resin powder was measured according to an imaging-type particle shape measuring method such as F-PIA and Moforogi, and an average equivalent circle diameter (number base) was calculated according to the formula below. The average equivalent circle diameter was of 1,000 or more particles. The result is presented in Table 1-2.

Equivalent circle diameter (micrometer)=positive square root of {4×(projected area of resin particle)÷π}

<Volume average particle diameter (Mv)/number average particle diameter (Mn)>

According to a dry method (atmospheric method) without using a solvent, the volume average particle diameter (Mv) (micrometer) of the obtained resin powder was measured with a particle size distribution measuring instrument (obtained from MicrotracBel Corporation, MICROTRAC MT3300EXII), using a particle refractive index of each resin powder.

The number average particle diameter (Mn) (micrometer) of the obtained resin powder was measured with a particle size distribution measurement instrument (F-PIA3000 obtained from Sysmex Corporation).

The volume average particle diameter/number average particle diameter (Mv/Mn) was calculated based on the obtained volume average particle diameter (Mv) (micrometer) and number average particle diameter (Mn) (micrometer). The result is presented in Table 1-2.

<Measurement of melting point (Tm) (degree C) and crystallization temperature (Tc) (degree C)>

The melting point (Tm) and the crystallization temperature (Tc) of the obtained resin powder were measured by differential scanning calorimetry (DSC). DISCOVERY DSC 25P (obtained from TA Instruments Japan Inc.) was used as the instrument according to ISO 3146. The measurement conditions were as follows. In the following description, measurement from 50 degrees C to 250 degrees C is referred to as first run, and measurement from 250 degrees C to 50 degrees C is referred to as temperature lowering measurement run.

(Measurement conditions)

- Start temperature: 50 degrees C
- Temperature raising rate: 10 degrees C/min
- End temperature: 250 degrees C
- Temperature lowering rate: 10 degrees C/min
- End temperature: 50 degrees C

An endothermic peak temperature on a DSC curve of the first run obtained by the measurement was determined as the melting point Tm. The result is presented in Table 1-2. Analyzing software (TA Universal analysis) was used for extracting the endothermic peak temperature.

An exothermic peak temperature on a DSC curve of temperature lowering measurement run obtained by the measurement was determined as the crystallization temperature Tc. The result is presented in Table 1-2. Analyzing software (TA Universal analysis) was used for extracting the exothermic peak temperature.

<Tan$\delta$ at melting point>

Loss tangent (tan$\delta$) of the obtained resin powder was measured with a dynamic viscoelasticity measuring instrument (instrument name: ARES-G2, obtained from TA Instruments Japan Inc.) when the resin powder was subjected to heating at a rate of 10 degrees C/min to a temperature higher by 30 degrees C than a melting point (Tm) of the resin powder measured during this heating, and cooled at a rate of 1 degree C/min from the temperature higher by 30 degrees C than the melting point (Tm) in differential scanning calorimetry (DSC) according to ISO 3146 (Testing Methods for Transition Temperatures of Plastics, JIS K7121). The result is presented in Table 1.

<Viscosity (Pa·s)>

The obtained resin powder was weighed out in 0.1 g, and pressurized at a pressure of 8N for 1 minute, to form a pellet. The viscosity (Pa·s) of the pellet was measured with a dynamic viscoelasticity measuring instrument (instrument name: ARES-G2, obtained from TA Instruments Japan Inc.) with the distance between stages for holding the sample set to 0.5 mm (constant), under a condition that the pellet was heated to a temperature higher than the melting point by 30 degrees C and subsequently cooled at a cooling rate of 1 degree C/min. The result is presented in Table 1-2.

Table 1-1

| | | Resin powder | | | |
|---|---|---|---|---|---|
| | | Resin kind | Materials | Content ratio (%) of 5605 to 5505S | Content ratio (%) of 5605 to 5020 |
| Ex. | 1 | PBT | 5505S | - | - |
| | 2 | PBT | 5505S(75) +5605(25) | 25 | - |
| | 3 | PBT | 5505S(50) +5605(50) | 50 | - |
| | 4 | PBT | 5020(50) +5505S(50) | - | - |
| | 5 | PBT | 5020(50) +5605(50) | - | 50 |
| | 6 | PBT | 5505S(75) +5605(25) | 25 | - |
| | 7 | PBT | 5020(50) +5505S(50) | - | - |
| | 8 | PBT | 5020(50) +5505S(50) | - | - |
| | 9 | PBT | 5020(50) +5505S(50) | - | - |
| | 10 | PBT | 5020(50) +5505S(50) | - | - |
| | 11 | PBT | 5020(50) +5505S(50) | - | - |
| | 12 | PBT | 5020(50) +5505S(50) | - | - |
| | 13 | PBT | 5020(50) +5505S(50) | - | - |
| | 14 | PBT | 5020(50) +5505S(50) | - | - |
| | 15 | Annealed PBT | 5505S(75) +5605(25) | 25 | - |
| | 16 | PEEK | - | - | - |
| | 17 | PPS | - | - | - |
| Comp. Ex. | 1 | PBT | 5020 | - | - |
| | 2 | PBT | 5605 | 100 | 100 |
| | 3 | PBT | 55055(5) +5605(95) | 95 | - |

Table 1-2

| | | | Resin powder | | | | | |
|---|---|---|---|---|---|---|---|---|
| | | | Particle shape | Equivalent circle diameter (micrometer) | Mv/Mn | Melting point Tm (degree C) | Crystallization temp. Tc (degree C) | Tan$\delta$ at melting point | Viscosity (Pa·S) |
| Ex. | 1 | | Circular cylindrical | 70 | 1.2 | 218 | 189 | 45.0 | $2.8\times 10^2$ |
| | 2 | | Circular cylindrical | 70 | 1.2 | 217 | 185 | 23.7 | $4.2\times 10^2$ |
| | 3 | | Circular cylindrical | 70 | 1.2 | 213 | 180 | 19.0 | $4.0\times 10^2$ |
| | 4 | | Circular cylindrical | 70 | 1.2 | 219 | 190 | 20.9 | $1.0\times 10^5$ |
| | 5 | | Circular cylindrical | 70 | 1.2 | 212 | 181 | 19.0 | $6.0\times 10^3$ |
| | 6 | | Crushed | 70 | 1.6 | 217 | 184 | 23.0 | $4.0\times 10^2$ |
| | 7 | | Crushed | 70 | 1.6 | 219 | 189 | 21.0 | $0.9\times 10^5$ |
| | 8 | | Circular cylindrical | 40 | 1.2 | 219 | 190 | 20.9 | $1.0\times 10^5$ |
| | 9 | | Circular cylindrical | 50 | 1.2 | 219 | 190 | 20.9 | $1.0\times 10^5$ |
| | 10 | | Circular cylindrical | 80 | 1.2 | 219 | 190 | 20.9 | $1.0\times 10^5$ |
| | 11 | | Circular cylindrical | 90 | 1.2 | 219 | 190 | 20.9 | $1.0\times 10^5$ |
| | 12 | | Circular cylindrical | 70 | 1.1 | 219 | 190 | 20.9 | $1.0\times 10^5$ |
| | 13 | | Circular cylindrical | 70 | 1.3 | 219 | 190 | 20.9 | $1.0\times 10^5$ |
| | 14 | | Circular cylindrical | 70 | 1.5 | 219 | 190 | 20.9 | $1.0\times 10^5$ |
| | 15 | | Circular cylindrical | 70 | 1.2 | 234 | 186 | 21.0 | $4.2\times 10^2$ |
| | 16 | | Circular cylindrical | 70 | 1.2 | 330 | 250 | 30.0 | $3.2\times 10^2$ |
| | 17 | | Circular cylindrical | 70 | 1.2 | 240 | 230 | 35.0 | $1.2\times 10^2$ |
| Comp. Ex. | 1 | | Circular cylindrical | 70 | 1.2 | 222 | 192 | 17.0 | $1.2\times 10^5$ |
| | 2 | | Crushed | 60 | 1.4 | 206 | 169 | 12.0 | $7.5\times 10^2$ |
| | 3 | | Circular cylindrical | 70 | 1.2 | 208 | 172 | 14.5 | $7.1\times 10^2$ |

Next, "warpage", "surface roughness Ra", and "cake hardness" of each obtained resin powder were evaluated in the manners described below. The results are presented in Table 2 below.

<Warpage>

Each obtained resin powder was added in the supplying tank of a SLS type object producing apparatus (obtained from Ricoh Company, Ltd., AM S5500P), and an object having the shape illustrated in FIG. 8A was produced. With the supplying tank set to a temperature lower than the melting point by from 10 degrees C through 20 degrees C and the laser output power set to from 40 W through 60 W, a three-dimensional object was produced by lamination of ten layers and visually evaluated according to the evaluation criteria described below. The ratings 2 or higher are evaluated as pass levels.

[Evaluation criteria]

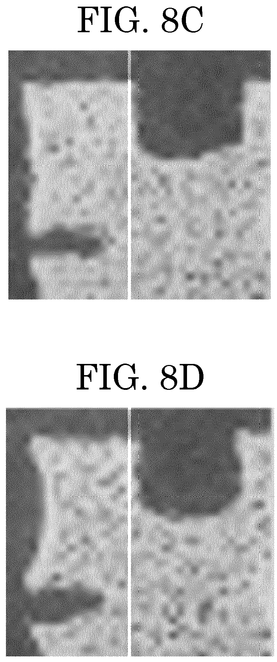

4: The three-dimensional object had no warpage and was squared at end portions as illustrated in FIG. 8A.
3: The three-dimensional object had no warpage and was slightly rounded at end portions as illustrated in FIG. 8B.
2: The three-dimensional object had slight warpage and was slightly rounded at end portions as illustrated in FIG. 8C.
1: The three-dimensional object had warpage and was rounded at end portions as illustrated in FIG. 8D.

<Surface roughness Ra>

Each obtained resin powder was added in the supplying tank of a SLS type object producing apparatus (obtained from Ricoh Company, Ltd., AM S5500P), and a rectangular parallelepiped three-dimensional object having a length of 5 cm on each side and an average thickness of 0.5 cm was produced.
The surface roughness Ra of a side surface of the obtained three-dimensional object (rectangular parallelepiped) was measured according to ISO 1302 (JIS B 0031). VR3200 (obtained from Keyence Corporation) was used as the instrument. As the surface roughness Ra, the average of results of five measurements was used as the test result. A smaller surface roughness value Ra means less surface roughness of the three-dimensional object. A surface roughness of 30 micrometers or less is a practically usable level.

<Production of three-dimensional object>

The obtained resin powder was added in the supplying tank of a SLS type object producing apparatus (obtained from Ricoh Company, Ltd., AM S5500P), and a three-dimensional object was produced. Set conditions include an average layer thickness of 0.1 mm, a laser output power of from 10 watts or higher but 150 watts or lower, a laser scanning space of 0.1 mm, and a parts bed temperature lower than the melting point by 3 degrees C. Using the SLS type object producing apparatus, five tensile test specimens (XY objects) with the longer side running in the XY plane direction (i.e., a plane direction in which the roller 12 travels in FIG. 5) and five tensile test specimens (Z objects) having the longer side running in the Z direction (i.e., a direction perpendicular to the plane in which the roller 12 travels in FIG. 5) were produced in the center of the laser scanning space 13. The interval between the objects was 5 mm or greater. The tensile test specimens were multipurpose dog bone-like test specimens compliant with International Organization for Standardization (ISO) 3167 Type 1A (the center portion of the specimens having a length of 80 mm, a thickness of 4 mm, and a width of 10 mm). The object production time was set to fifty hours.
Next, using the same resin powder, five tensile test specimens having the same shape were produced by injection molding.

<Cake hardness>

After production of a three-dimensional object produced for measurement of strength of a three-dimensional object, any excessive powder around the three-dimensional object was touched and evaluated according to the evaluation criteria described below. The ratings 2 or higher are pass levels.

[Evaluation criteria]

4: The excessive powder was powdery and included no aggregation.
3: The excessive powder was not powdery, but was collapsed when picked.
2: The excessive powder was not powdery and could be picked, but was loosened when grabbed.

1: The excessive powder was not powdery, could be picked, and was hard with aggregation of particles remaining after grabbed.

"Hard with aggregation of particles remaining after grabbed" in the evaluation criterion "1" means that the shape was not collapsed by grabbing, or even if the shape was collapsed, fine aggregations of particles remained, and the excessive powder did not return to the desired state (a state of individual particles being independent from each other). Hence, when the excessive powder was evaluated as "1", the excessive powder (cake) around the three-dimensional object cannot be recycled, leading to cost burden increase.

Table 2

| | | Evaluation result | | |
| --- | --- | --- | --- | --- |
| | | Warpage | Surface roughness Ra (micrometer) | Cake hardness |
| Ex. | 1 | 4 | 19 | 2 |
| | 2 | 4 | 22 | 2 |
| | 3 | 3 | 26 | 2 |
| | 4 | 4 | 24 | 3 |
| | 5 | 2 | 30 | 2 |
| | 6 | 4 | 24 | 2 |
| | 7 | 4 | 26 | 2 |
| | 8 | 2 | 15 | 2 |
| | 9 | 3 | 18 | 2 |
| | 10 | 3 | 25 | 3 |
| | 11 | 3 | 29 | 4 |
| | 12 | 4 | 21 | 4 |
| | 13 | 4 | 26 | 3 |
| | 14 | 4 | 28 | 3 |
| | 15 | 4 | 28 | 3 |
| | 16 | 3 | 24 | 2 |
| | 17 | 3 | 29 | 2 |
| Comp. Ex. | 1 | 1 | 34 | 3 |
| | 2 | 1 | 37 | 1 |
| | 3 | 2 | 34 | 1 |

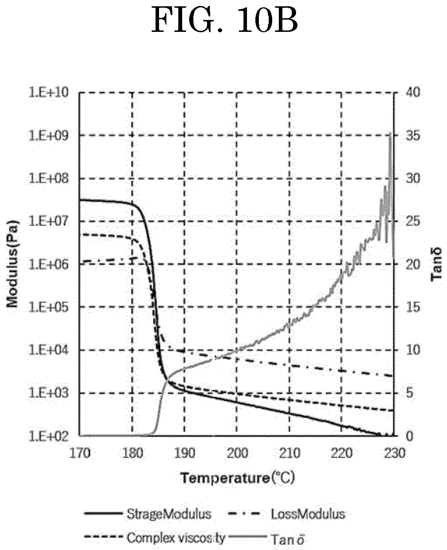

FIG. 10A and FIG. 10 are graphs plotting measurements of "Storage modulus", "Loss modulus", "Complex Viscosity", and "tan$\delta$ (loss tangent)" with respect to temperature change in Example 4 and Comparative Example 2, respectively. As plotted in FIG. 10A, it was proved that a three-dimensional object obtained with the resin powder of Example 4 having a loss tangent tan$\delta$ of "23.7" at the melting point (219 degrees C) thereof had little warpage and little surface roughness, because the loss tangent tan$\delta$ was 18.0 or greater. On the other hand, as plotted in FIG. 10B, it was proved that a three-dimensional object obtained with the resin powder of Comparative Example 2 having a loss tangent tan$\delta$ of "12.0" at the melting point (206 degrees C) thereof was not able to achieve good results in warpage and surface roughness.

**Claims**

**1.** A resin powder,

wherein when the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent (tan$\delta$) of 18.0 or greater,

wherein the resin powder contains at least one selected from the group consisting of polybutylene terephthalate, polyphenylene sulfide, and polyether ether ketone.

2. The resin powder according to claim 1,
   wherein the loss tangent (tan$\delta$) of the resin powder is 20.0 or greater.

3. The resin powder according to according to claim 2,
   wherein the loss tangent (tan$\delta$) of the resin powder is 20.0 or greater but 45.0 or less.

4. The resin powder according to claim 3,
   wherein a viscosity of the resin powder is $1.0\times10^5$ Pa·s or lower.

5. The resin powder according to any one of claims 1 to 4,
   wherein the melting point (Tm) of the resin powder is 210 degrees C or higher but 350 degrees C or lower.

6. The resin powder according to claim 5,
   wherein the melting point (Tm) of the resin powder is 210 degrees C or higher but 250 degrees C or lower.

7. The resin powder according to claim 6,
   wherein the melting point (Tm) of the resin powder is 210 degrees C or higher but 235 degrees C or lower.

8. The resin powder according to any one of claims 1 to 7,
   wherein a particle diameter ratio (volume average particle diameter (Mv)/number average particle diameter (Mn) as measured according to the description) of a volume average particle diameter (Mv) of the resin powder to a number average particle diameter (Mn) of the resin powder is less than 2.0.

9. The resin powder according to any one of claims 1 to 8,
   wherein the resin powder contains a columnar particle having a bottom surface and a side surface.

10. Use of the resin powder according to any one of claims 1 to 9 for producing a three-dimensional object.

11. A three-dimensional object producing method comprising:

    forming a powder material layer using a resin powder; and
    curing the powder material layer to form an object forming layer,
    wherein when the resin powder is subjected to heating at a rate of 10 degrees C/min to a temperature higher by 30 degrees C than a melting point (Tm) of the resin powder measured during this heating, and subjected to cooling at a rate of 1 degree C/min from the temperature higher by 30 degrees C than the melting point (Tm) until the resin powder reaches the melting point (Tm) in differential scanning calorimetry (DSC) according to ISO 3146 (Testing Methods for Transition Temperatures of Plastics, JIS K7121), the resin powder has a loss tangent (tan$\delta$) of 18.0 or greater,
    wherein the resin powder contains at least one selected from the group consisting of polybutylene terephthalate, polyphenylene sulfide, and polyether ether ketone.

12. A system comprising:

    the resin powder according to any one of claims 1 to 9;
    and a three-dimensional object producing apparatus, wherein the three-dimensional object producing apparatus comprises:

    a layer forming unit configured to form a powder material layer using the resin powder; and
    an object forming layer forming unit configured to cure the powder material layer to form an object forming layer.

**Patentansprüche**

1. Harzpulver,

   wobei das Harzpulver einen Verlustfaktor (tanδ) von 18,0 oder mehr aufweist, wenn das Harzpulver mit einer Geschwindigkeit von 10 °C/min auf eine Temperatur erhitzt wird, die 30 °C über dem während dieser Erhitzung gemessenen Schmelzpunkt (Tm) des Harzpulvers liegt, und anschließend mit einer Geschwindigkeit von 1 °C/min von der um 30 °C höheren Temperatur als dem Schmelzpunkt (Tm) abgekühlt wird, bis das Harzpulver den Schmelzpunkt (Tm) gemäß der Differential-Scanning-Kalorimetrie (DSC) nach ISO 3146 (Prüfverfahren für Übergangstemperaturen von Kunststoffen, JIS K7121) erreicht hat,
   wobei das Harzpulver mindestens eines aus der Gruppe bestehend aus Polybutylenterephthalat, Polyphenylensulfid und Polyetheretherketon enthält.

2. Harzpulver gemäß Anspruch 1,
   wobei der Verlustfaktor (tanδ) des Harzpulvers 20,0 oder größer ist.

3. Harzpulver gemäß Anspruch 2,
   wobei der Verlustfaktor (tanδ) des Harzpulvers 20,0 oder größer, aber 45,0 oder kleiner ist.

4. Harzpulver gemäß Anspruch 3,
   wobei die Viskosität des Harzpulvers $1,0 \times 10^5$ Pa· s oder weniger beträgt.

5. Harzpulver gemäß einem der Ansprüche 1 bis 4,
   wobei der Schmelzpunkt (Tm) des Harzpulvers 210 °C oder höher, aber 350 °C oder niedriger ist.

6. Harzpulver gemäß Anspruch 5,
   wobei der Schmelzpunkt (Tm) des Harzpulvers 210 °C oder höher, aber 250 °C oder niedriger ist.

7. Harzpulver gemäß Anspruch 6,
   wobei der Schmelzpunkt (Tm) des Harzpulvers 210 °C oder höher, aber 235 °C oder niedriger ist.

8. Harzpulver gemäß einem der Ansprüche 1 bis 7,
   wobei das Partikeldurchmesserverhältnis (volumengemittelter Partikeldurchmesser (Mv)/zahlenmittlerer Partikeldurchmesser (Mn), gemessen gemäß der Beschreibung) des volumengemittelten Partikeldurchmessers (Mv) des Harzpulvers zum zahlenmittleren Partikeldurchmesser (Mn) des Harzpulvers weniger als 2,0 beträgt.

9. Harzpulver gemäß einem der Ansprüche 1 bis 8,
   wobei das Harzpulver ein säulenförmiges Teilchen mit einer Bodenfläche und einer Seitenfläche enthält.

10. Verwendung des Harzpulvers gemäß einem der Ansprüche 1 bis 9 zur Herstellung eines dreidimensionalen Objekts.

11. Verfahren zur Herstellung eines dreidimensionalen Objekts, umfassend:

    Bilden einer Pulvermaterialschicht unter Verwendung eines Harzpulvers; und
    Aushärten der Pulvermaterialschicht, um eine Objektbildungsschicht zu bilden,
    wobei das Harzpulver einen Verlustfaktor (tanδ) von 18,0 oder mehr aufweist, wenn das Harzpulver mit einer Geschwindigkeit von 10 °C/min auf eine Temperatur erhitzt wird, die 30 °C über dem während dieser Erhitzung gemessenen Schmelzpunkt (Tm) des Harzpulvers liegt, und mit einer Geschwindigkeit von 1 °C/min von der um 30 °C höheren Temperatur als dem Schmelzpunkt (Tm) abgekühlt wird, bis das Harzpulver den Schmelzpunkt (Tm), gemäß nach ISO 3146 (Prüfverfahren für Übergangstemperaturen von Kunststoffen, JIS K7121) erreicht hat,
    wobei das Harzpulver mindestens eines aus der Gruppe bestehend aus Polybutylenterephthalat, Polyphenylensulfid und Polyetheretherketon enthält.

12. System, umfassend:

    das Harzpulver gemäß einem der Ansprüche 1 bis 9;
    und eine Vorrichtung zur Herstellung dreidimensionaler Objekte, wobei die Vorrichtung zur Herstellung dreidimensionaler Objekte umfasst:

eine Schichtbildungseinheit, die so konfiguriert ist, dass sie unter Verwendung des Harzpulvers eine Pulvermaterialschicht bildet; und
eine Objektformungsschicht-Bildungseinheit, die so konfiguriert ist, dass sie die Pulvermaterialschicht aushärtet, um eine Objektformungsschicht zu bilden.

**Revendications**

1. Poudre de résine,

dans laquelle, lorsque la poudre de résine est soumise à un chauffage à une vitesse de 10 degrés C/min jusqu'à une température supérieure de 30 degrés C à un point de fusion (Tm) de la poudre de résine mesuré pendant ce chauffage, et lorsqu'elle est soumise à un refroidissement à une vitesse de 1 degré C/min à partir de la température supérieure de 30 degrés C au point de fusion (Tm) jusqu'à ce que la poudre de résine atteigne le point de fusion (Tm) dans une analyse calorimétrique différentielle à balayage (DSC) selon la norme ISO 3146 (Méthodes d'essai pour les températures de transition des plastiques, JIS K7121), la poudre de résine présente une tangente de perte (tan$\delta$) de 18,0 ou plus,
dans laquelle la poudre de résine contient au moins un élément choisi dans le groupe constitué par le polytéréphtalate de butylène, le polysulfure de phénylène et la polyéther éther cétone.

2. Poudre de résine selon la revendication 1,
dans laquelle la tangente de perte (tan$\delta$) de la poudre de résine est de 20,0 ou plus.

3. Poudre de résine selon la revendication 2,
dans laquelle la tangente de perte (tan$\delta$) de la poudre de résine est de 20,0 ou plus, mais de 45,0 ou moins.

4. Poudre de résine selon la revendication 3,
dans laquelle une viscosité de la poudre de résine est de $1,0 \times 10^5$ Pa·s ou moins.

5. Poudre de résine selon l'une quelconque des revendications 1 à 4,
dans laquelle le point de fusion (Tm) de la poudre de résine est de 210 degrés C ou plus, mais de 350 degrés C ou moins.

6. Poudre de résine selon la revendication 5,
dans laquelle le point de fusion (Tm) de la poudre de résine est de 210 degrés C ou plus, mais de 250 degrés C ou moins.

7. Poudre de résine selon la revendication 6,
dans laquelle le point de fusion (Tm) de la poudre de résine est de 210 degrés C ou plus, mais de 235 degrés C ou moins.

8. Poudre de résine selon l'une quelconque des revendications 1 à 7,
dans laquelle un rapport de diamètre de particule (diamètre de particule moyen en volume (Mv)/diamètre de particule moyen en nombre (Mn) tel que mesuré selon la description) entre le diamètre de particule moyen en volume (Mv) de la poudre de résine et le diamètre de particule moyen en nombre (Mn) de la poudre de résine est inférieur à 2,0.

9. Poudre de résine selon l'une quelconque des revendications 1 à 8,
dans laquelle la poudre de résine contient une particule colonnaire présentant une surface inférieure et une surface latérale.

10. Utilisation de la poudre de résine selon l'une quelconque des revendications 1 à 9 pour produire un objet tridimensionnel.

11. Procédé de production d'un objet tridimensionnel comprenant :

la formation d'une couche de matériau en poudre à l'aide d'une poudre de résine ; et

le durcissement de la couche de matériau en poudre pour former une couche de formation d'objet,

dans lequel, lorsque la poudre de résine est soumise à un chauffage à une vitesse de 10 degrés C/min jusqu'à une température supérieure de 30 degrés C au point de fusion (Tm) de la poudre de résine mesuré pendant ce chauffage, et lorsqu'elle est soumise à un refroidissement à une vitesse de 1 degré C/min à partir de la température supérieure de 30 degrés C au point de fusion (Tm) jusqu'à ce que la poudre de résine atteigne le point de fusion (Tm) dans une analyse calorimétrique différentielle à balayage (DSC) selon la norme ISO 3146 (Méthodes d'essai pour les températures de transition des plastiques, JIS K7121), la poudre de résine présente une tangente de perte (tan$\delta$) de 18,0 ou plus,

dans lequel la poudre de résine contient au moins un élément choisi dans le groupe constitué par le polytéréphtalate de butylène, le polysulfure de phénylène et la polyéther éther cétone.

12. Système comprenant :

la poudre de résine selon l'une quelconque des revendications 1 à 9 ;

et un appareil de production d'objet tridimensionnel, dans lequel l'appareil de production d'objet tridimensionnel comprend :

une unité de formation de couche configurée pour former une couche de matériau en poudre à l'aide de la poudre de résine ; et

une unité de formation de couche de formation d'objet configurée pour durcir la couche de matériau en poudre afin de former une couche de formation d'objet.

# FIG. 1A

# FIG. 1B

# FIG. 1C

# FIG. 1D

# FIG. 1E

# FIG. 1F

# FIG. 1G

# FIG. 1H

# FIG. 1I

# FIG. 2

# FIG. 3

# FIG. 4

# FIG. 5

# FIG. 6A

# FIG. 6B

# FIG. 7A

# FIG. 7B

## FIG. 8A

## FIG. 8B

## FIG. 8C

## FIG. 8D

# FIG. 9

45°      45°Back surface

Roughness of lower surface is affected
by edge accuracy of printing on powder   Laser

Upper
surface

Layer
lamination
direction

Lower
surface

# FIG. 10A

——— Stragemodulus  — · — LossModulus

- - - - ComplexViscos ty ——— Tan δ

# FIG. 10B

**EP 3 882 300 B1**

**Patent documents cited in the description**

- WO 2017112723 A
- US 20130302730 A1
- US 20090186290 A1
- US 20180147780 A1
- US 6531086 B